# EUROPEAN PATENT APPLICATION

(11) **EP 1 329 455 A1**
(43) Date of publication of application: **23.07.2003**
(21) Application number: 02075250.7
(22) Date of filing: 22.01.2002
(51) Int. Cl.: C07F 19/00, C07F 15/00, C08G 61/08, C07C 6/04, C08F 4/00, C08F 2/38, B01J 31/28

(54) **Metal carbene complexes, methods and intermediates for making them and their use in metathesis reactions**

(71) Applicant: UNIVERSITEIT GENT, 9000 Gent (BE)
(72) Inventor: Verpoort, Francis Walter Cornelius, 8830 Gits (BE); de Clercq, Bob, 9700 Oudenaarde (BE)
(74) Representative: Bird, William Edward

(57) **Abstract**

Compounds having one of the general formulae: 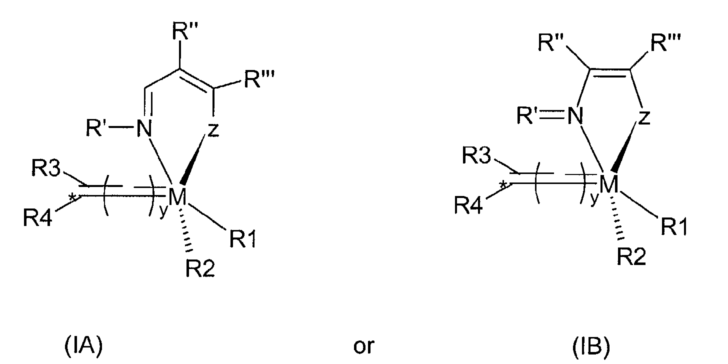 wherein:
- M is a metal;
- Z is selected from the group consisting of oxygen, sulphur, NR"" and PR"";
- R", R"' and R"" are each a radical independently selected from hydrogen, C₁₋₆ alkyl, C₃₋₈ cycloalkyl, aryl and heteroaryl, or R" and R"' together form an aryl or heteroaryl radical, each said radical being optionally substituted;
- R' is either as defined for R", R"' and R"" when included in a compound having the general formula (IA) or, when included in a compound having the general formula (IB), is selected from hydrogen, C₁₋₆ alkylene and C₃₋₈ cycloalkylene, the said alkylene and cycloalkylene group being optionally substituted;
- R₁ is a constraint steric hindrance group having a pKₐ of at least about 15;
- R₂ is an anionic ligand;
- R₃ and R₄ are each hydrogen or a radical selected from, among others, C₁₋₂₀ alkyl, C₁₋₂₀ alkenyl;
- R₃ and R₄ together may form a fused aromatic ring system, and
- y represents the number of sp₂ carbon atoms between M and the carbon atom bearing R₃ and R₄ and is an integer from 0 to 3 inclusive
are useful as catalysts for olefin metathesis and atom transfer radical polymerization.

## Description

The present invention relates to metal carbene complexes which are useful as catalyst components in olefin metathesis reactions and in atom or group transfer radical polymerisation reactions. The present invention also relates to derivatives of the said metal complexes which are suitable for covalent bonding to a carrier, the product of such covalent bonding being useful as a supported catalyst for heterogeneous catalytic reactions. Finally, the invention relates to dendrimeric materials comprising metal carbene complexes attached to a core molecule which are catalysts removable from a reaction mixture by ultrafiltration. More particularly, the present invention relates to Schiff base derivatives of ruthenium alkylidene complexes bearing N-heterocyclic carbene ligands and methods for making the same.

### BACKGROUND OF THE INVENTION

Olefin metathesis is a catalytic process including, as a key step, a reation between a first olefin and a first transition metal alkylidene complex, thus producing an unstable intermediate metallacyclobutane ring which then undergoes transformation into a second olefin and a second transition metal alkylidene complex according to equation (1) hereunder. Reactions of this kind are reversible and in competition with one another, so the overall result heavily depends on their respective rates and, when formation of volatile or insoluble products occur, displacement of equilibrium.

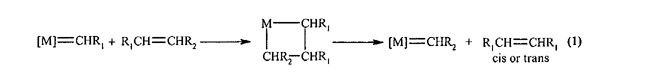

Several exemplary but non-limiting types of metathesis reactions for monoolefins or di-olefins are shown in equations (2) to (5) herein-after. Removal of a product, such as ethylene in equation (2), from the system can dramatically alter the course and/or rate of a desired metathesis reaction, since ethylene reacts with an alkylidene complex in order to form a methylene (M=CH₂) complex, which is the most reactive and also the least stable of the alkylidene complexes.

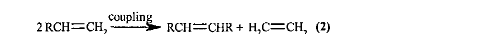

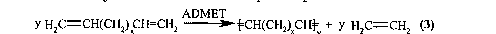

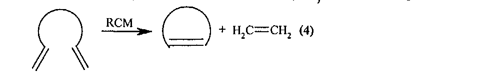

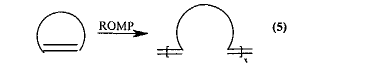

Of potentially greater interest than homo-coupling (equation 2) is cross-coupling between two different terminal olefins. Coupling reactions involving dienes lead to linear and cyclic dimers, oligomers, and, ultimately, linear or cyclic polymers (equation 3). In general, the latter reaction is favoured in highly concentrated solutions or in bulk, while cyclisation is favoured at low concentrations. When intra-molecular coupling of a diene occurs so as to produce a cyclic alkene, the process is called ring-closing metathesis (equation 4). Cyclic olefins can be opened and oligomerised or polymerised (ring opening metathesis polymerisation shown in equation 5). When the alkylidene catalyst reacts more rapidly with the cyclic olefin (e.g. a norbornene or a cyclobutene) than with a carbon-carbon double bond in the growing polymer chain, then a "living ring opening metathesis polymerisation" may result, i.e. there is little termination during or after the polymerization reaction.

A large number of catalyst systems comprising well-defined single component metal carbene complexes have been prepared and utilized in olefin metathesis. One major development in olefin metathesis was the discovery of the ruthenium and osmium carbene complexes by Grubbs and co-workers. U.S.Patent No. 5,977,393 discloses Schiff base derivatives of such compounds, which are useful as olefin metathesis catalysts, wherein the metal is coordinated by a neutral electron donor such as a triarylphosphine or a tri(cyclo)alkylphosphine. Such catalysts show an improved thermal stability while maintaining high metathesis activity even in polar protic solvents.

On the other hand, living polymerisation systems were reported for anionic and cationic polymerisation, however their industrial application has been limited by the need for high-purity monomers and solvents, reactive initiators and anhydrous conditions. In contrast, free-radical polymerisation is the most popular commercial process to yield high molecular weight polymers. A large variety of monomers can be polymerised and copolymerised radically under relatively simple experimental conditions which require the absence of oxygen but can be carried out in the presence of water. However free-radical polymerisation processes often yield polymers with ill-controlled molecular weights and high polydispersities. Combining the advantages of living polymerisation and radical polymerisation is therefore of great interest and was achieved by the atom (or group) transfer radical polymerisation process (hereinafter referred as ATRP) of U.S. Patent No. 5,763,548 involving (1) the atom or group transfer pathway and (2) a radical intermediate. This type of living polymerization, wherein chain breaking reactions such as transfer and termination are substantially absent, enables control of various parameters of the macromolecular structure such as molecular weight, molecular weight distribution and terminal functionalities. It also allows the preparation of various copolymers, including block and star copolymers. Living/controlled radical polymerization requires a low stationary concentration of radicals in equilibrium with various dormant species. It makes use of novel initiation systems based on the reversible formation of growing radicals in a redox reaction between various transition metal compounds and initiators such as alkyl halides, aralkyl halides or haloalkyl esters. ATRP is based on a dynamic equilibrium between the propagating radicals and the dormant species which is established through the reversible transition metal-catalysed cleavage of the covalent carbon-halogen bond in the dormant species. Polymerisation systems utilising this concept have been developed for instance with complexes of copper, ruthenium, nickel, palladium, rhodium and iron in order to establish the required equilibrium.

Due to the development of ATRP, further interest appeared recently for the Kharash reaction, consisting in the addition of a polyhalogenated alkane across an olefin through a radical mechanism according to the following scheme:

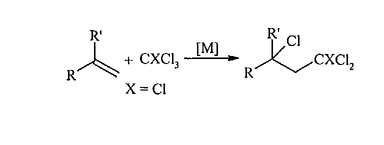

As can easily be seen, ATRP is quite similar to the Kharasch reaction, which therefore is also called Atom Transfer Radical Addition (hereinafter referred as ATRA).

Experiments have shown that the behaviour of transition metal ruthenium alkylidene complexes in olefin metathesis reactions is inversely proportional to their activity in ATRP and ATRA, i.e. the most efficient catalysts for olefin metathesis reactions display the lowest activity in ATRP and ATRA. Therefore, there is a need in the art for a catalyst component which is able to display a high efficiency both in olefin metathesis reactions and in ATRP and ATRA. There is also a need in the art for a catalyst component which is able to initiate olefin reaction under very mild conditions, e.g. at room temperature.

Furthermore, since all synthetic routes to the catalysts of U.S.Patent No. 5,977,393 proceed through the transformation of a ruthenium bisphosphane carbene, the development of catalysts with equivalent or better performance characteristics but synthesised directly from less expensive and readily available starting materials still corresponds to a need in the art.

### SUMMARY OF THE INVENTION

The present invention is based on the unexpected finding that improved olefin metathesis catalysts can be obtained by modifying the Schiff base derivatives of ruthenium and osmium of the prior art by providing as a ligand a constraint steric hindrance group having a pKₐ of at least about 15 and/or by providing the possibility that the groups of the carbene ligand together form a fused aromatic ring system and/or by providing a cumulylidene group as a carbene ligand. Advantageously, modified Schiff base derivatives of ruthenium, osmium and other transition metals may be produced directly from less expensive and more readily available starting materials than the catalysts of the prior art. The present invention is also based on the unexpected finding that these modified Schiff base derivatives of ruthenium, osmium and other transition metals are not only efficient olefin metathesis catalysts but also very efficient components in the catalysis of atom (or group) transfer radical polymerisation processes and in the initiation of the Atom Transfer Radical Addition reaction. A further unexpected finding of the present invention is that certain Schiff base derivatives of ruthenium and osmium of the prior art, as well as related derivatives of other transition metals may also be used in the catalysis of atom (or group) transfer radical polymerisation processes. Also included in this invention are intermediates for preparing the novel catalytically active Schiff base derivatives. Further aspects of the invention include supported catalysts for use in heterogeneous catalytic reactions comprising a catalytically active Schiff base derivative and a carrier suitable for supporting the same. In particular the invention provides derivatives wherein the Schiff base metal complexes are chemically modified in order to be suitable for covalent bonding to a carrier such as an inorganic oxide or an organic polymer resin. Finally another aspect of the invention includes, in order for the catalyst to be suitably removed from a reaction mixture by ultra-filtration, dendrimeric matrials wherein two or more of the catalytically active Schiff base derivatives are attached to a core molecule.

### BRIEF DESCRIPTION OF THE DRAWINGS

Figure 1 schematically shows synthetic routes for producing ruthenium catalytic compounds having the general formula (IA) according to a first embodiment of the present invention.
Figure 2 schematically shows a synthetic route for producing ruthenium catalytic compounds having the general formula (IC) according to another embodiment of the present invention.

### DEFINITIONS

As used herein, the term C₁₋₆ alkyl means straight and branched chain saturated hydrocarbon monovalent radicals having from 1 to 6 carbon atoms such as, for example, methyl, ethyl, propyl, n-butyl, 1-methylethyl, 2-methylpropyl, 1,1-dimethylethyl, 2-methylbutyl, n-pentyl, dimethylpropyl, n-hexyl, 2-methylpentyl, 3-methylpentyl and the like; C₂₋₆ alkyl means analogue radicals having from 2 to 6 carbon atoms, and so on.

As used herein, the term C₁₋₆ alkylene means the divalent hydrocarbon radical corresponding to the above defined C₁₋₆ alkyl.

As used herein, the term C₃₋₈ cycloalkyl means a cycloaliphatic monovalent radical having from 3 to 8 carbon atoms, such as for instance cyclopropyl, cyclobutyl, methylcyclobutyl, cyclopentyl, methylcyclopentyl, cyclohexyl, methylcyclohexyl, cycloheptyl, cyclooctyl and the like, or a C₇₋₁₀ polycycloalkyl radical having from 7 to 10 carbon atoms such as, for instance, norbornyl.

As used herein, the term C₃₋₈ cycloalkylene means the divalent hydrocarbon radical corresponding to the above defined C₃₋₈ cycloalkyl.

As used herein, the term aryl means a mono- and polyaromatic monovalent radical such as phenyl, naphtyl, anthracenyl, adamantyl, phenantracyl, fluoranthenyl, chrysenyl, pyrenyl, picenyl and the like, including fused benzo-C₅₋₈ cycloalkyl radicals such as, for instance, indanyl, 1,2,3,4-tetrahydronaphtalenyl, fluorenyl and the like.

As used herein, the term heteroaryl means a mono- and polyheteroaromatic monovalent radical including one or more heteroatoms selected from the group consisting of nitrogen, oxygen, sulfur and phosphorus, such as for instance pyridinyl, pyrazinyl, pyrimidinyl, pyridazinyl, triazinyl, triazolyl, imidazolyl, pyrazolyl, thiazolyl, isothiazolyl, oxazolyl, pyrrolyl, furanyl, thienyl, indolyl, indazolyl, benzofuryl, benzothienyl, quinolyl, quinazolinyl, quinoxalinyl, carbazolyl, phenoxazinyl, phenothiazinyl, xanthenyl, purinyl and the like, including all possible isomeric forms thereof.

As used herein, the term C₁₋₆ alkoxy means a C₁₋₆ alkyl radical attached to an oxygen atom, such as methoxy, ethoxy, propoxy, butoxy and the like; C₂₋₆ alkoxy means analogue radicals having from 2 to 6 carbon atoms, and so on

As used herein, the term halogen means an atom selected from the group consisting of fluorine, chlorine, bromine and iodine

As used herein, the term C₁₋₂₀ alkyl includes C₁₋₆ alkyl (as hereinabove defined) and the higher homologues thereof having 7 to 20 carbon atoms, such as for instance heptyl, ethylhexyl, octyl, nonyl, decyl, dodecyl, octadecyl and the like.

As used herein, the term polyhaloC₁₋₂₀alkyl defines a C₁₋₂₀ alkyl in which each hydrogen atom may be independently replaced by a halogen (preferably fluorine or chlorine), such as difluoromethyl, trifluoromethyl, trifluoroethyl, octafluoropentyl, dodecafluoroheptyl, heptadecafluorooctyl and the like.

As used herein, the term C₂₋₂₀ alkenyl defines straight and branched chain hydrocarbon radicals containing one double bond and having from 2 to 20 carbon atoms such as, for example, vinyl, 2-propenyl, 3-butenyl, 2-butenyl, 2-pentenyl, 3-pentenyl, 3-methyl-2-butenyl, 3-hexenyl, 2-hexenyl, 2-octenyl, 2-decenyl and the like, and all possible isomers thereof, as well as cyclic hydrocarbon radicals containing one double bond and having from 4 to 20 carbon atoms such as for example cyclobutenyl, cyclopentenyl, cyclohexenyl, cycloheptenyl, cyclooctenyl and the like.

As used herein, the term C₂₋₂₀ alkynyl defines straight and branched chain hydrocarbon radicals containing one triple bond and having from 2 to 20 carbon atoms such as, for example, acetylenyl, 2-propynyl, 3-butynyl, 2-butynyl, 2-pentynyl, 3-pentynyl, 3-methyl-2-butynyl, 3-hexynyl, 2-hexynyl and the like and all possible isomers thereof.

As used herein, the term C₁₋₂₀ alkoxy means the higher homologues of C₁₋₆ alkoxy (as hereinabove defined) having up to 20 carbon atoms, such as octyloxy, decyloxy, dodecyloxy and the like.

As used herein, the terms alkylammonium and arylammonium mean a tetra-coordinated nitrogen atom being linked to C₁₋₆ alkyl, C₃₋₈ cycloalkyl, aryl or heteroaryl groups, respectively.

### DETAILED DESCRIPTION OF THE INVENTION

A first embodiment of the present invention relates to a family of compounds having one of the following general formulae: 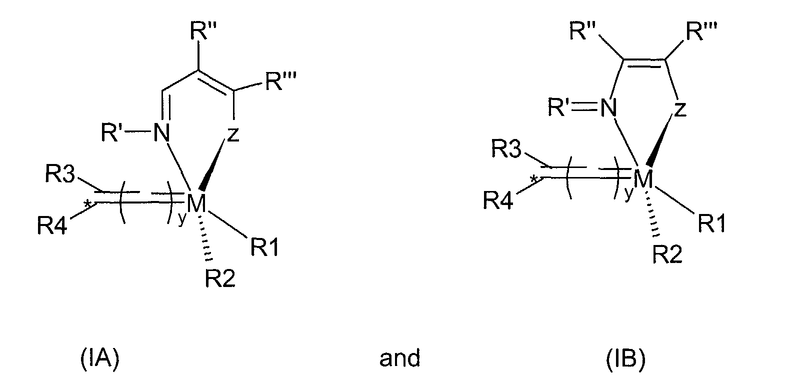 wherein:
- M is a metal selected from the group consisting of ruthenium, osmium, iron, molybdenum, tungsten, titanium, rhenium, copper, chromium, manganese, rhodium, vanadium, zinc, gold, silver, nickel and cobalt;
- Z is selected from the group consisting of oxygen, sulphur, NR"" and PR"";
- R", R"' and R"" are each a radical independently selected from the group consisting of hydrogen, C₁₋₆ alkyl, C₃₋₈ cycloalkyl, aryl and heteroaryl, or R" and R"' together form an aryl or heteroaryl radical, each said radical (when different from hydrogen) being optionally substituted with one or more, preferably 1 to 3, substituents R₅ each independently selected from the group consisting of halogen atoms, C₁₋₆ alkyl, C₁₋₆ alkoxy, aryl, alkylsulfonate, arylsulfonate, alkylphosphonate, arylphosphonate, alkylammonium and arylammonium;
- R' is either as defined for R", R"' and R"" when included in a compound having the general formula (IA) or, when included in a compound having the general formula (IB), is selected from the group consisting of hydrogen, C₁₋₆ alkylene and C₃₋₈ cycloalkylene, the said alkylene and cycloalkylene group being optionally substituted with one or more substituents R₅;
- R₁ is a constraint steric hindrance group having a pKₐ of at least about 15;
- R₂ is an anionic ligand;
- R₃ and R₄ are each hydrogen or a radical selected from the group consisting of C₁₋₂₀ alkyl, C₂₋₂₀ alkenyl, C₂₋₂₀ alkynyl, C₁₋₂₀ carboxylate, C₁₋₂₀ alkoxy, C₂₋₂₀ alkenyloxy, C₂₋₂₀ alkynyloxy, aryl, aryloxy, C₁₋₂₀ alkoxycarbonyl, C₁₋₈ alkylthio, C₁₋₂₀ alkylsulfonyl, C₁₋₂₀ alkylsulfinyl C₁₋₂₀ alkylsulfonate, arylsulfonate, C₁₋₂₀ alkylphosphonate, arylphosphonate, C₁₋₂₀ alkylammonium and arylammonium;
- R₃ and R₄ together may form a fused aromatic ring system, and
- y represents the number of sp₂ carbon atoms between M and the carbon atom bearing R₃ and R₄ and is an integer from 0 to 3 inclusive.

In the above definition of the compounds of the invention, the group R₁ is only limited by its capacity to provide constraint steric hindrance, the said capacity being usually closely relate to the value of its pKₐ. Suitable but non-limiting examples of such groups include imidazol-2-ylidene (pKₐ = 24), dihydroimidazol-2-ylidene (pKₐ higher than 24), oxazol-2-ylidene, triazol-5-ylidene, thiazol-2-ylidene and non-ionic prophosphatrane superbases, and derivatives thereof wherein one or more hydrogen atoms is substituted with a R' group. Non-ionic prophosphatrane superbases are well known in the art, being namely described in U.S.Patent No. 5,698,737. A particularly preferred superbase for use as a R₁ group in this invention is trimethyltriazaprophosphatrane, P(CH₃NCH₂CH₂)₃N also known as Verkade superbase.

In the above definition of the compounds of the invention, the group R₂ is an anionic ligand preferably selected from the group consisting of C₁₋₂₀ alkyl, C₂₋₂₀ alkenyl, C₂₋₂₀ alkynyl, C₁₋₂₀ carboxylate, C₁₋₂₀ alkoxy, C₂₋₂₀ alkenyloxy, C₂₋₂₀ alkynyloxy, aryl, aryloxy, C₁₋₂₀ alkoxycarbonyl, C₁₋₈ alkylthio, C₁₋₂₀ alkylsulfonyl, C₁₋ ₂₀ alkylsulfinyl C₁₋₂₀ alkylsulfonate, arylsulfonate, C₁₋₂₀ alkylphosphonate, arylphosphonate, C₁₋₂₀ alkylammonium, arylammonium, halogen and cyano.

The carbene ligand of the compounds of the invention will now be detailed hereinafter. First it is important to note that, opposite to the Schiff base derivatives of the prior art, from 1 to 3 sp₂ carbon atoms may be present between the metal M and the carbon atom bearing the R₃ and R₄ groups, the synthetic route for each such species of compounds being different as explained in the following part of specification devoted to their processes of manufacture. That is, unsaturated carbon chain such as an allenylidene or cumulenylidene (e.g. buta-1,2,3-trienylidene, penta-1,2,3,4-tetraenylidene and the like) may be present in the said carbene ligand. Because of the simplicity of its manufacturing route, a preferred embodiment consists of a carbene ligand wherein y = 2. However, methods to produce compounds with carbene ligands wherein y = 1 or y = 3 will also be provided. Alike in the Schiff base derivatives of the prior art, y may also be 0. A first preferred embodiment consists of each of R₃ and R₄ being a phenyl group. In a second preferred embodiment, R₃ and R₄ together form a fused aromatic ring system having the following formula:

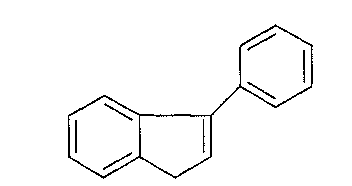

In the above definition of the compounds of the invention having general formula (IA), the group R' is preferably selected from methyl, phenyl and substituted phenyl (e.g. dimethylbromophenyl or diisopropylphenyl). In the compounds of the invention having the general formula (IB), the group R' is preferably methylene or benzylidene.

In a more specific embodiment of the invention, especially when the above compounds are intended for use in an olefin metathesis reaction, M is preferably selected from the group consisting of ruthenium, osmium, iron, molybdenum, tungsten, titanium and rhenium.

A second embodiment of the present invention relates to a first method for making compounds having one of the general formulae (IA) and (IB), comprising reacting a compound having one of the general formulae: 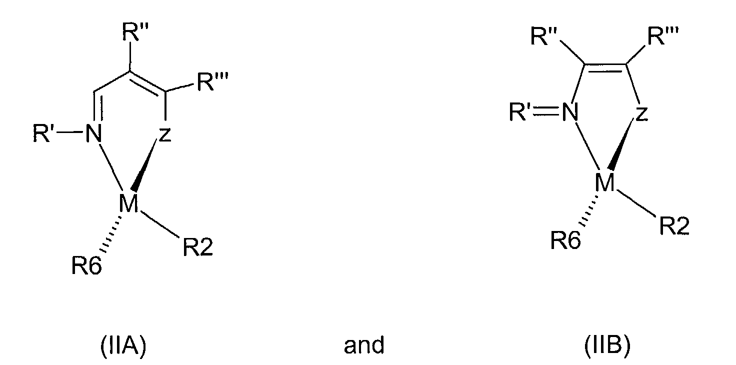 wherein M, Z, R, R',R", R"', R"" and R₂ are as previously defined for the compounds having the general formulae (IA) and (IB) respectively, and R₆ is a leaving group, with a compound having the formula R₁Y wherein R₁ is as previously defined and Y is a leaving group, thus resulting in an intermediate having the formula : 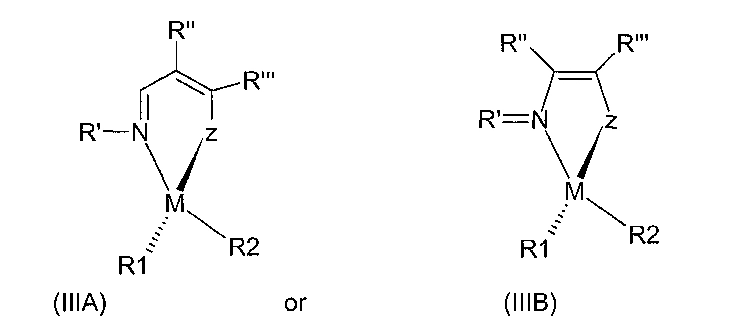 and further reacting the said intermediate with a reactant selected from the group consisting of:
- an alkynyl compound having the formula R₃R₄R₇CC≡CH wherein R₃ and R₄ are as previously defined for the compounds having the general formulae (IA) and (IB) respectively, and R₇ is selected from the group consisting of hydrogen, hydroxyl and R₃ (when y = 2),
- a diazo compound having the formula N₂CR₃R₄ wherein R₃ and R₄ are as previously defined (when y is 0),
- an alkynyl compound having the formula R₃C≡CH wherein R₃ is as previously defined (when y is 1), and
- a dialkynyl compound having the formula R₂₁C≡C-C≡CR₂₂ wherein R₂₁ and R₂₂ are each independently selected from hydrogen and trialkylsilyl (when y is 3).

For performing the above first method, the leaving group Y is preferably selected from the group consisting of hydrogen, C₁₋₆ alkoxy (e.g. tert-butoxy), PR₃ and NR₃, wherein R₃ is as previously defined. As indicated herein-above, the reactant used in the second step of the method differs from one species to the other, depending upon the value of y. For instance, when y is 2, a suitable alkylnyl compound is one wherein each of R₃ and R₄ is a phenyl group and R₇ is hydroxy. When y is 3, a suitable dialkylnyl compound is butadiyne or trimethylsilylbutadiyne.

A third embodiment of the present invention relates to a second method for making compounds such as described herein-above, comprising in a first step reacting a compound having the general formula: 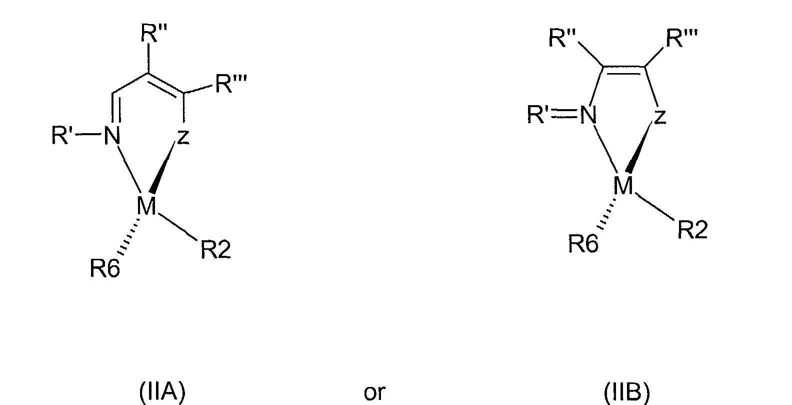 wherein M, Z, R, R', R", R''', R"" and R₂ are as previously defined for the compounds having the general formulae (IA) and (IB) respectively, and R₆ is a leaving group, with a reactant selected from the group consisting of:
- an alkynyl compound having the formula R₃R₄R₇CC≡CH wherein R₃ and R₄ are as previously defined for the compounds having the general formulae (IA) and (IB) respectively, and R₇ is selected from the group consisting of hydrogen, hydroxyl and R₃ (when y = 2),
- a diazo compound having the formula N₂CR₃R₄ wherein R₃ and R₄ are as previously defined (when y is 0),
- an alkynyl compound having the formula R₃C≡CH wherein R₃ is as previously defined (when y is 1), and
- a dialkynyl compound having the formula R₂₁C≡C-C≡C R₂₂ wherein R₂₁ and R₂₂ are each independently selected from hydrogen and trialkylsilyl (when y is 3),
and in a second step further reacting the reaction product of the first step with a compound having the formula R₁Y wherein R₁ is as defined and Y is a leaving group. In this second method, suitable examples of the leaving group Y are as disclosed for the first method.

In the above methods, R₆ is preferably a group selected from aromatic and unsaturated cycloaliphatic (such as cyclooctadienyl, norbornadienyl, cyclopentadienyl and cyclooctatrienyl) groups, the said group being optionally substituted with one or more C₁₋₆ alkyl groups. A suitable example of such a group is methylisopropylphenyl, the methyl and isopropyl substituents of the phenyl group being in para positions.

A fourth embodiment of the present invention relates to a first class of intermediate compounds having one of the general formulae (IIIA) and (IIIB) hereinabove, wherein:
- M is a metal selected from the group consisting of ruthenium, osmium, iron, molybdenum, tungsten, titanium, rhenium, copper, chromium, manganese, rhodium, vanadium, zinc, gold, silver, cobalt and nickel;
- Z is selected from the group consisting of oxygen, sulphur, NR"" and PR"";
- R", R''' and R"" are each a radical independently selected from the group consisting of hydrogen, C₁₋₆ alkyl, C₃₋₈ cycloalkyl, aryl and heteroaryl, or R" and R"' together form an aryl or heteroaryl radical, each said radical being optionally substituted with one or more, preferably 1 to 3, substituents R₅ each independently selected from the group consisting of halogen atoms, C₁₋₆ alkyl, C₁₋₆ alkoxy, aryl, alkylsulfonate, arylsulfonate, alkylphosphonate, arylphosphonate, alkylammonium and arylammonium;
- R' is either as defined for R", R"' and R"" when included in a compound having the general formula (IA) or, when included in a compound having the general formula (IB), is selected from the group consisting of hydrogen, C₁₋₆ alkylene and C₃₋₈ cycloalkylene, the said alkylene and cycloalkylene group being optionally substituted with one or more substituents R₅;
- R₁ is a constraint steric hindrance group having a pKₐ of at least about 15; and
- R₂ is an anionic ligand.

Within this fourth embodiment of the invention is also included a second class of intermediate compounds having one of the general formulae (IIA) and (IIB) hereinabove, wherein:
- M is a metal selected from the group consisting of ruthenium, osmium, iron, molybdenum, tungsten, titanium, rhenium, copper, chromium, manganese, rhodium, vanadium, zinc, gold, silver, cobalt and nickel;
- Z is selected from the group consisting of oxygen, sulphur, NR"" and PR"";
- R", R"' and R"" are each a radical independently selected from the group consisting of hydrogen, C₁₋₆ alkyl, C₃₋₈ cycloalkyl, aryl and heteroaryl, or R" and R"' together form an aryl or heteroaryl radical, each said radical being optionally substituted with one or more, preferably 1 to 3, substituents R₅ each independently selected from the group consisting of halogen atoms, C₁₋₆ alkyl, C₁₋₆ alkoxy, aryl, alkylsulfonate, arylsulfonate, alkylphosphonate, arylphosphonate, alkylammonium and arylammonium, or R" and R''' together form an aryl or heteroaryl radical, the said radical being substituted with either one substituent R₅ selected from the group consisting of bromine, iodine, C₂₋₆ alkyl, C₂₋₆ alkoxy, aryl, alkylsulfonate, arylsulfonate, alkylphosphonate, arylphosphonate, alkylammonium and arylammonium, or two or more substituents R₅ each independently selected from the group consisting of halogen atoms, C₁₋₆ alkyl, C₁₋₆ alkoxy, aryl, alkylsulfonate, arylsulfonate, alkylphosphonate, arylphosphonate, alkylammonium and aryl-ammonium;
- R' is either as defined for R", R"' and R"" when included in a compound having the general formula (IA) or, when included in a compound having the general formula (IB), is selected from the group consisting of hydrogen, C₁₋₆ alkylene and C₃₋₈ cycloalkylene, the said alkylene and cycloalkylene group being optionally substituted with one or more substituents R₅;
- R₂ is an anionic ligand; and
- R₆ is a group selected from aromatic and unsaturated cycloaliphatic (such as cyclooctadienyl, norbornadienyl, cyclopentadienyl and cyclooctatrienyl) groups, the said group being optionally substituted with one or more C₁₋₆ alkyl groups.
More specific definitions of R₁ and R₂ for the above classes of intermediate compounds are as already given for the compounds having the general formulae (IA) and (IB) respectively. All such intermediate compounds are useful for making the family of compounds having one of the general formulae (IA) and (IB) as stated hereinabove.

The second class of intermediates having the formula (IIA) may be prepared by analogy to a well known method comprising first condensing an hydroxy-aldehyde such as salicylaldehyde (when Z is oxygen) or a thio-aldehyde (when Z is sulfur) or an amino-aldehyde (when Z is NR""), wherein the hydroxy, thio or amino group is in a β position with respect to the aldehyde group, with a primary aliphatic or aromatic amine, then converting the resulting aldimine into a salt thereof by means of a reaction with e.g. an alkoxide of a metal of any of groups IA, IIA or IIIA of the Periodic Classification of Elements (e.g. sodium, potassium, magnesium or thallium) and then reacting the said salt with a metal complex having a labile ligand (e.g. halogen) such as for instance [RuCl₂(p-cumene)]₂. The second class of intermediates having the formula (IIB) may be prepared, in order to yield the desired five-member chelate ligand, by first condensing an aldehyde such as benzaldehyde with an amino-alcohol such as o-hydroxyaniline (when Z is oxygen) or an amino-thiol (when Z is sulfur) or a diamine (when Z is NR""), wherein the hydroxy, thio or secondary amino group is in a β position with respect to the primary amino group, then converting the resulting aldimine into a salt thereof and then reacting the said salt with a metal complex having a labile ligand in a manner similar to that indicated for compound (IIA) above.

A fifth embodiment of the present invention relates to the use of a compound having one of the general formulae (IA) and (IB), wherein the metal M is selected from the group consisting of ruthenium, osmium, iron, molybdenum, tungsten, titanium and rhenium, as a catalyst for transforming a first olefin into at least one second olefin (being different from the said first olefin) or into a linear olefin oligomer or polymer or else into a cyclo-olefin. A sixth embodiment of the present invention relates to a supported catalyst for use in a heterogeneous catalytic reaction, comprising (a) a catalytically active compound having one of the general formulae (IA) and (IB), and (b) a supporting amount of a carrier suitable for supporting said catalytically active compound (a). The invention thus relates to a method for performing a metathesis reaction comprising contacting at least one first olefin with a catalytically active metal carbene compound having one of the general formulae (IA) and (IB), optionally supported on a suitable carrier. Carriers suitable for supporting this type of catalyst are well known in the art and include both inorganic oxides such as silica, alumino-silica, natural and synthetic zeolites, and organic polymer materials such as polystyrene resins and derivatives thereof

The high level metathesis activity of the metal carbene compounds of the present invention cause these compounds to coordinate with and catalyze metathesis reactions between all types of olefins. Examplary reactions enabled by the metal carbene compounds of the present invention include, but are not limited to, ring-opening metathesis polymerization of cyclic olefins, ring closing metathesis of acyclic dienes, cross metathesis reactions involving at least one acyclic or cyclic olefin and de-polymerization of olefinic polymers. In particular, the catalysts of the present invention are able to catalyze cyclic olefins with a ring size of at least three atoms. Examples of cyclic olefins that may be used in such metathesis reactions include norbornene and functional derivatives thereof (such as illustrated in the following examples), cyclobutene, norbornadiene, cyclopentene, dicyclopentadiene, cycloheptene, cyclooctene, 7-oxanorbornene, 7-oxanorbornadiene, cyclooctadiene and cyclododecene.

The said metathesis polymerization reaction is generally carried out in an inert atmosphere by dissolving a catalytic amount of a metal carbene catalyst in a solvent and adding a cyclic olefin, optionally dissolved in a solvent, to the carbene solution, preferably under agitation. Examples of solvents that may be used for performing the metathesis reaction include organic, protic or aqueous solvents which are inert under the polymerization conditions, such as aromatic hydrocarbons, chlorinated hydrocarbons, ethers, aliphatic hydrocarbons, alcohols, esters, water or mixtures thereof, as well as supercritical solvents such as carbon dioxide (while performing the reaction under supercritical conditions). Preferred solvents include benzene, toluene, p-xylene, methylene chloride, dichloroethane, dichlorobenzene, chlorobenzene, tetrahydrofuran, diethylether, pentane, methanol, ethanol, water, or mixtures thereof. The solubility of the polymer formed during the metathesis polymerization reaction will depend upon the choice of solvent and the molecular weight of the polymer obtained. Reaction temperatures can range typically from about 0°C to about 100°C, preferably 20°C to 50°C. The duration of the reaction may be from about 1 to 600 minutes. The molar ratio of catalyst to olefin is not critical and can range from about 1:10 to about 1:500,000, preferably from 1:100 to about 1:50,000 and more preferably from 1:500 to 1:10,000. Before the polymer formed solidifies or, at will, when a desired molecular weight of the polymer has been achieved, an oxidation inhibitor and/or a terminating (or chain-transfer) agent may be added to the reaction mixture. The choice of the terminating agent used is not critical to this invention, provided that the said terminating agent reacts with the catalytic carbene metal compound (IA) or (IB) and produces another carbene metal compound which is inactive, i.e. not able to further propagate the reaction, under the prevailing temperature conditions. Suitable examples of such terminating agents include vinylic compounds such as phenyl vinyl sulfide, ethyl vinyl ether, vinyl acetate and N-vinylpyrrolidone.

Because the metal carbene compounds (IA) and (IB) of this invention are stable in the presence of various functional groups, they may be used to catalyze a wide variety of olefins, in particular the first olefin to be transformed according to the fifth and sixth embodiments of the present invention may include one or more functional atoms or groups, for instance selected from the group consisting of alcohol, thiol, ketone, aldehyde, ester, disulfide, carbonate, imine, carboxyl, amine, amide, carboxylic acid, isocyanate, thioisocyanate, carbodiimide, ether, thioether, nitro, phosphate, halogen (preferably chloro), ammonium, phosphonate and sulfonate (preferably paratoluenesulfonate, methanesulfonate or trifluoromethanesulfonate). The said first olefin functional atom or group may be either part of a substituting group of the first olefin or part of the carbon chain of the first olefin.

The high level metathesis activity of the metal carbene compounds of this invention also makes them useful for catalyzing, at relatively low temperatures (about 20°C to 80°C) the ring-closing metathesis of acyclic dienes such as, for instance, diallylic compounds (diallyl ether, diallyl phtalate, diallyl amine, etc), 1,7-octadiene, substituted 1,6-heptadienes and the like. They may also be used for the preparation of telechelic polymers, i.e. macromolecules with one or more reactive end-groups which are useful materials for chain extension processes, block copolymer synthesis, reaction injection molding, and polymer network formation. For most applications, a highly functionalized polymer, i.e. a polymer with at least two functional groups per chain, is required. The reaction scheme for a telechelic polymer synthesis via ring opening metathesis polymerisation is well known to those skilled in the art: in such a scheme, acyclic olefins act as chain-transfer agents in order to regulate the molecular weight of the telechelic polymer produced. When α,ω-bifunctional olefins are used as chain-transfer agents, truly bi-functional telechelic polymers can be synthesized.

As a summary, a metathesis reaction method according to the invention can be performed, wherein the first olefin is an acyclic mono-olefin. For instance the said method for olefin coupling by cross-metathesis may comprise the step of contacting a first acyclic olefin or functionalized olefin, such as above-defined, with a metal carbene compound of the invention in the presence of a second olefin or functionalized olefin. More preferably, the said cross-metathesis reaction can be for transforming a mixture of a mono-olefin having the formula R₈CH=CHR₁₀ and a mono-olefin having the formula R₉CH=CHR₁₁, wherein each of R₈, R₉, R₁₀ and R₁₁ is independently selected from C₁₋₂₀ alkyl groups optionally bearing one or more functional atoms or groups such as above defined, into a mixture of a mono-olefin having the formula R₈CH=CHR₉ and a mono-olefin having the formula R₁₁CH=CHR₁₀.

Alternatively, the said first olefin may be a diolefin or a cyclic mono-olefin with a ring size of at least three atoms, and the said metathesis reaction is preferably performed under conditions suitable for transforming said diolefin or cyclic mono-olefin into a linear olefin oligomer or polymer. When the said first olefin is a diolefin, the said metathesis reaction may also be performed under conditions suitable for transforming said diolefin into a mixture of a cyclic mono-olefin and an aliphatic alpha-olefin.

Depending upon the selection of the starting substrates for the metathesis reaction and the intended use of the final organic molecule to be produced, the said metathesis reaction can yield a very wide range of end-products including biologically active compounds. For instance the reaction may be for transforming a mixture of two dissimilar olefins, at least one of which is an alpha-olefin, selected from (i) cyclodienes containing from 5 to 12 carbon atoms and (ii) olefins having the formula:

XHC=CH-(CH₂)ᵣ-(CH=CH)ₐ-(CHX')_{c}-(CH₂)ₜ-X" (IV),

into an unsaturated biologically active compound having the formula:

H(CH₂)_{z}-(CH=CH)ₐ-(CH₂)ₘ-(CH=CH)_{b}-(CH₂)ₚX" (V),

wherein
a is an integer from 0 to 2,
b is selected from 1 and 2,
c is selected from 0 and 1,
m and p are such that the hydrocarbon chain in formula (V) contains from 10 to 18 carbon atoms,
r and t are such that the combined total of carbon atoms in the hydrocarbon chains of the two dissimilar olefins of formula (IV) is from 12 to 40,
z is an integer from 1 to 10, and
X, X' and X" are atoms or groups each independently selected from hydrogen, halogen, methyl, acetyl, -CHO and -OR₁₂, wherein R₁₂ is selected from hydrogen and an alcohol protecting group selected from the group consisting of tetrahydropyranyl, tetrahydrofuranyl, tert-butyl, trityl, ethoxyethyl and SiR₁₃R₁₄R₁₅ wherein R₁₃, R₁₄ and R₁₅ are each independently selected from C₁₋₆ alkyl groups and aryl groups.

The said unsaturated biologically active compound having the formula (V) may be a pheromone or pheromone precursor, an insecticide or a insecticide precursor, a pharmaceutical compound or a pharmaceutical intermediate, a fragrance or a fragrance precursor. A few examples of the said unsaturated biologically active compounds include 7,11-hexadecadienyl acetates, 1-chloro-5-decene, trans,trans-8,10-dodeca-dienol, 3,8,10-dodecatrienol, 5-decenyl acetate, 11-tetradecenylacetate and 1,5,9-tetradecatriene. Gossyplure, comprising a mixture of 7,11-hexadecadienyl acetate stereoisomers, is a commercially available pheronome useful in pest control in view of its effectiveness in disrupting the mating and reproductive cycles of specifically targeted insect species. It may advantageously be produced from 1,5,9-tetradecatriene, the latter being obtainable from cyclooctadiene and 1-hexene according to the present invention.

When performing the metathesis reaction process of the invention, although in most cases the said reaction proceeds very quickly, it may be advantageous for a few specific olefins, in order to improve the reaction rate and/or yield of the metathesis reaction, to further contact the first olefin, and optionally the second olefin, with an organic or inorganic acid or a Lewis acid based on aluminium, titanium or boron.

At the opposite, as illustrated by some of the following examples, ring-opening metathesis polymerization reactions using the catalysts of the invention may proceed in such an extremely quickly fashion for monomers such as norbornene and substituted norbornenes that polymerization control could become a problem in the absence of appropriate measures. This kind of problem is likely to occur during the molding of thermoset polymers wherein a liquid olefin monomer and a catalyst are mixed and poured, cast or injected into a mold and wherein on completion of polymerization (i.e. "curing" of the article) the molded part is removed from the mold before any post cure processing that may be required, such as in the Reaction Injection Molding ("RIM") technique. It is well known that the ability to control reaction rates, i.e. the pot life of the reaction mixture, becomes more important in the molding of larger parts. Using the catalysts of the invention, extending the pot life and/or controlling the rate of a metathesis polymerisation reaction may be effected in different ways, such as increasing the ratio catalyst/olefin and/or adding a polymerization retardant to the reaction mixture. Moreover this can be achieved by an improved embodiment comprising:
(a) a first step of contacting a metathesis catalyst with an olefin in a reactor at a first temperature at which the said metathesis catalyst is substantially unreactive, and
(b) a second step of heating the said reactor to a second temperature above the said first temperature,
wherein the metathesis catalyst is a compound, optionally supported on a suitable carrier, having one of the general formulae (IA) and (IB),
wherein the metal M is preferably selected from the group consisting of ruthenium, osmium, iron, molybdenum, tungsten, titanium and rhenium.

Within the said controlled polymerization method, it should be understood that the non-reactivity of the catalyst in the first step depends not only on the first temperature but also on the olefin/catalyst ratio in the olefin/catalyst mixture. More preferably the first temperature is about room temperature, but for specific olefins and specific olefin/catalyst ratios it may even be suitable to cool the olefin/catalyst mixture below room temperature, e.g. down to about 0°C.

As illustrated by the following examples, ring-opening metathesis polymerization reactions using the catalysts of the invention readily achieve polymers such as polynorbornene, and functional derivatives thereof, with better controlled characteristics such as a molecular weight (number average) ranging from about 30,000 to 600,000 and a polydispersity index (M_{w}/Mₙ) ranging from about 1.3 to 3.5.

Ring-opening metathesis polymerization reactions using the catalysts of the invention, in particular when performed in a mold such as in the RIM technique, may occur in the presence of formulation auxiliaries, such as antistatics, antioxidants, ceramics, light stabilizers, plasticizers, dyes, pigments, fillers, reinforcing fibers, lubricants, adhesion promoters, viscosity-enhancing agents and demolding agents as is already well known in the art.

Yet another use of the metal carbene compounds of the present invention, having one of the general formulae (IA) and (IB) and wherein the metal M is preferably selected from the group consisting of ruthenium, osmium, iron, molybdenum, tungsten, titanium and rhenium, is as a catalyst for the radical addition reaction of a polyhalogenated alkane onto an olefin (the so-called Kharasch reaction), as shown in the scheme of the section " Background of the invention". Such a reaction is preferably performed in the presence of an organic solvent, in a molar excess of the polyhalogenated alkane, and within a temperature range between about 30° and 100°C. Suitable examples of the polyhalogenated alkane used in this embodiment of the invention are carbon tetrachloride and carbon tetrabromide. Examples of suitable olefins include vinylaromatic monomers such as styrene or vinyltoluene, α,β-ethylenically unsaturated acid esters such as C₁₋₁₀ alkyl acrylates and methacrylates, acrylonitrile and the like.

A seventh embodiment of the present invention relates to the use of a compound having one of the general formulae (IA) and (IB), or a compound having one of the general formulae: 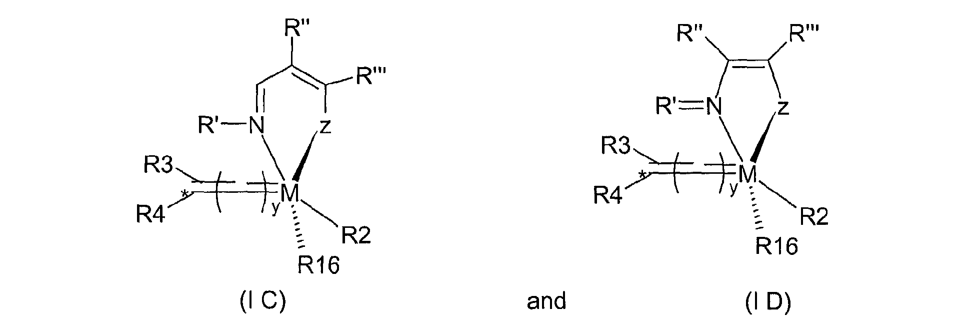 wherein:
- M is selected from the group consisting of ruthenium, osmium, iron, molybdenum, tungsten, titanium, rhenium, copper, chromium, manganese, rhodium, vanadium, zinc, gold, silver, nickel and cobalt;
- Z, R', R", R"', R"", R₂, R₃, R₄ and y are as previously defined in respect of formulae (IA) and (IB), and
- R₁₆ is a neutral electron donor,
as a catalyst component of a catalytic system for the atom or group transfer radical polymerization of one or more radically (co)polymerizable monomers.

By contrast to the constraint steric hindrance group R₁ of compounds (IA) and (IB), the neutral electron donor R₁₆ of compounds (IC) and (ID) usually has a pKₐ less than about 15. Suitable examples of R₁₆ are phosphines of the formula PR₁₇R₁₈R₁₉ wherein R₁₇, R₁₈ and R₁₉ are each independently selected from the group consisting of C₁₋₁₀ alkyl, C₃₋₈ cycloalkyl and aryl, such as for instance tricyclohexylphosphine (pKₐ= 9.7), tricyclopentylphosphine, triisopropylphosphine and triphenylphosphine (pKₐ = 2.7). Although compounds (IC) and (ID) are less effective than compounds (IA) and (IB) in the catalysis of olefin metathesis reactions, they were found to be efficient in the catalysis of the so-called atom or group transfer radical polymerization.

Some of the compounds having one of the general formulae (IC) and (ID), especially those wherein y is 0 and M is ruthenium or osmium, are well known to those skilled in the art, being described in U.S.Patent No. 5,977,393 as metathesis catalysts. Compounds having one of the general formulae (IC) and (ID), wherein y is from 1 to 3 inclusive, or wherein y is 0 but M is a metal selected from the group consisting of iron, molybdenum, tungsten, titanium, rhenium, copper, chromium, manganese, rhodium, vanadium, zinc, gold, silver, cobalt and nickel, are not yet known in the art but can suitably be prepared by any of the methods disclosed herein as second and third embodiments of this invention, while simply replacing R₁ with R₁₆ in the starting materials of the relevant method step.

As already mentioned herein-above, it is critical to the success of living/controlled radical polymerisation contemplated as a seventh embodiment of the present invention to achieve rapid exchange between growing radicals present at low stationary concentrations (in a range of from about 10⁻⁸ mole/l to 10⁻⁶ mole/l) and dormant chains present at higher concentrations (typically in a range of from about 10⁻⁴ mole/l to 1 mole/l). It may therefore be desirable to match the respective amounts of the catalytic component of the invention and of the radically (co)polymerizable monomer(s) in such a way that these concentration ranges are achieved. If the concentration of growing radicals exceeds about 10⁻⁶ mole/l, there may be too many active species in the reaction, which may lead to an undesirable increase in the rate of side reactions (e.g. radical-radical quenching, radical abstraction from species other than the catalyst system, and do on). If the concentration of growing radicals is less than about 10⁻⁸ mole/l, the polymerisation rate may be undesirably slow. Similarly, if the concentration of dormant chains is less than about 10⁻⁴ mole/l, the molecular weight of the polymer produced may increase dramatically, thus leading to a potential loss of control of its polydispersity. On the other hand, if the concentration of dormant species is greater than 1 mole/l, the molecular weight of the reaction product may likely become too small and result in the properties of an oligomer with no more than about 10 monomeric units. In bulk, a concentration of dormant chains of about 10⁻² mole/l provides a polymer having a molecular weight of about 100,000 g/mole.
The various catalytic components of the present invention are suitable for the radical polymerisation of any radically polymerizable alkene, including (meth)acrylates, styrenes and dienes. They are able to provide controlled copolymers having various structures, including block, random, gradient, star, graft, comb, hyperbranched and dendritic (co)polymers.

More specifically, monomers suitable for living radical polymerization according to the seventh embodiment of the present invention include those of the formula R₃₁R₃₂C=C R₃₃R₃₄ wherein:
- R₃₁ and R₃₂ are independently selected from the group consisting of hydrogen, halogen, CN, CF₃, C₁₋₂₀ alkyl (preferably C₁₋₆ alkyl), α,β-unsaturated C₂₋₂₀ alkynyl (preferably acetylenyl), α,β-unsaturated C₂₋₂₀ alkenyl (preferably vinyl) optionally substituted (preferably at the α position) with a halogen, C₃₋₈ cycloalkyl, phenyl optionally bearing 1 to 5 substituents,
- R₃₃ and R₃₄ are independently selected from the group consisting of hydrogen, halogen (preferably fluorine or chlorine), C₁₋₆ alkyl and COOR₃₅ (where R₃₅ is selected from hydrogen, an alkali metal, or C₁₋₆ alkyl), and
- at least two of R₃₁ , R₃₂ , R₃₃ and R₃₄ are hydrogen or halogen.

Accordingly, suitable vinyl heterocycles which can be used as a monomer in the present invention include 2-vinyl pyridine, 6-vinyl pyridine, 2-vinyl pyrrole, 5-vinyl pyrrole, 2-vinyl oxazole, 5-vinyl oxazole, 2-vinyl thiazole, 5-vinyl thiazole, 2-vinyl imidazole, 5-vinyl imidazole, 3-vinyl pyrazole, 5-vinyl pyrazole, 3-vinyl pyridazine, 6-vinyl pyridazine, 3-vinyl isoxazole, 3-vinyl isothiazoles, 2-vinyl pyrimidine, 4-vinyl pyrimidine, 6-vinyl pyrimidine, and any vinyl pyrazine, the most preferred being 2-vinyl pyridine.

Other preferred monomers include:
- (meth)acrylic esters of C₁₋₂₀ alcohols,
- acrylonitrile,
- cyanoacrylic esters of C₁₋₂₀ alcohols,
- didehydromalonate diesters of C₁₋₆ alcohols,
- vinyl ketones wherein the α carbon atom of the alkyl group does not bear a hydrogen atom, and
- styrenes optionally bearing a C₁₋₆ alkyl group on the vinyl moiety (preferably at the α carbon atom) and from 1 to 5 substituents on the phenyl ring, said substituents being selected from the group consisting of C₁₋₆ alkyl, C₁₋₆ alkenyl (preferably vinyl), C₁₋₆ alkynyl (preferably acetylenyl), C₁₋₆ alkoxy, halogen, nitro, carboxy, C₁₋₆ alkoxycarbonyl, hydroxy protected with a C₁₋₆ acyl, cyano and phenyl.

The most preferred monomers are methyl acrylate, methyl methacrylate, butyl acrylate, 2-ethylhexyl acrylate, acrylonitrile and styrene.

In this seventh embodiment of the invention, the catalytic component of the invention is more preferably used in combination with an initiator having a radically transferable atom or group, since an ATRP catalytic system is based on the reversible formation of growing radicals in a redox reaction between the metal component and an initiator.

Suitable initiators include those having the formula R₃₅R₃₆R₃₇CX₁ wherein:
- X₁ is selected from the group consisting of halogen, OR₃₈ (wherein R₃₈ is selected from C₁₋₂₀ alkyl, polyhaloC₁₋₂₀alkyl, C₂₋₂₀ alkynyl (preferably acetylenyl), C₂₋₂₀ alkenyl (preferably vinyl), phenyl optionally substituted with 1 to 5 halogen atoms or C₁₋₆ alkyl groups and phenyl-substituted C₁₋₆ alkyl), SR₃₉, OC(=O)R₃₉, OP(=O)R₃₉, OP(=O)(OR₃₉)₂, OP(=O)OR₃₉, O--N(R₃₉)₂ and S--C(=S)N(R₃₉)₂, wherein R₃₉ is aryl or C₁₋₂₀ alkyl, or where an N(R₃₉)₂ group is present, the two R₃₉ groups may be joined to form a 5-, 6-or 7-membered heterocyclic ring (in accordance with the definition of heteroaryl above), and
- R_{35,} R₃₆ and R₃₇ are each independently selected from the group consisting of hydrogen, halogen, C₁₋₂₀ alkyl (preferably C₁₋₆ alkyl), C₃₋₈ cycloalkyl, C(=O)R₄₀, (wherein R₄₀ is selected from the group consisting of C₁₋₂₀ alkyl, C₁₋₂₀ alkoxy, aryloxy or heteroaryloxy), C(=O)NR₄₁R₄₂ (wherein R₄₁ and R₄₂ are independently selected from the group consisting of hydrogen and C₁₋₂₀ alkyl or R₄₁ and R₄₂ may be joined together to form an alkylene group of 2 to 5 carbon atoms), COCI, OH, CN, C₂₋₂₀ alkenyl (preferably vinyl), C₂₋₂₀ alkynyl, oxiranyl, glycidyl, aryl, heteroaryl, arylalkyl and aryl-substituted C₂₋₂₀ alkenyl.

In these initiators, X₁ is preferably bromine, which provides both a higher reaction rate and a lower polymer polydispersity.

When an alkyl, cycloalkyl, or alkyl-substituted aryl group is selected for one of R_{35,} R₃₆ and R₃₇, the alkyl group may be further substituted with an X₁ group as defined above. Thus, it is possible for the initiator to serve as a starting molecule for branch or star (co)polymers. One example of such an initiator is a 2,2-bis(halomethyl)-1,3-dihalopropane (e.g. 2,2-bis(chloromethyl)-1,3-dichloropropane or 2,2-bis(bromomethyl)-1,3-dibromopropane), and a preferred example is where one of R_{35,} R₃₆ and R₃₇ is phenyl substituted with from one to five C₁₋₆ alkyl substituents, each of which may independently be further substituted with a X₁ group (e.g. α,α'-dibromoxylene, hexakis(α-chloro- or α-bromomethyl)benzene). Preferred initiators include 1-phenylethyl chloride and 1-phenylethyl bromide, chloroform, carbon tetrachloride, 2-chloropropionitrile and C₁₋₆alkyl esters of a 2-halo- C₁₋₆carboxylic acid (such as 2-chloropropionic acid, 2-bromopropionic acid, 2-chloroisobutyric acid, 2-bromoisobutyric acid and the like).

Any transition metal compound which can participate in a redox cycle with the initiator and dormant polymer chain, but which does not form a direct carbon-metal bond with the polymer chain, such as ruthenium, osmium, iron, molybdenum, tungsten, titanium, rhenium, copper, chromium, manganese, rhodium, vanadium, zinc, gold, silver, nickel and cobalt, is suitable for use in this embodiment of the present invention. In this seventh embodiment of the invention, the catalytic metal carbene component of the invention may be one wherein the anionic ligand R₂ is preferably selected from the group consisting of halogen, C₁₋₆alkoxy, sulfate, phosphate, hydrogenophosphate, triflate, hexafluorophosphate, methanesulfonate, arylsulfonate (preferably benzenesulfonate or toluenesulfonate), cyano, tetrafluoroborate and C₁₋₆carboxylate. As is well known to those skilled in the art, one such catalytic component having a anionic ligand like tetrafluoroborate may suitably be prepared by ligand exchange by reacting a metal carbene compound having a halogen as the anionic ligand R₂ with a metal compound having another anion, e.g. silver tetrafluoroborate, which is able to extract and replace the halogen atom, thus giving rise to a cationic alkylidene complex. It was unexpectedly found that such cationic alkylidene complexes exhibit better catalytic activity than the corresponding metal carbene complexes being coordinated with a halogen ligand.

In this aspect of the present invention, the amounts and relative proportions of the initiator and the transition metal carbene compound are those effective to conduct ATRP. The molar proportion of the transition metal carbene compound relative to the initiator may be from 0.0001:1 to 10:1, preferably from 0.1:1 to 5:1, more preferably from 0.3:1 to 2:1, and most preferably from 0.9:1 to 1.1:1.

ATRP according to the invention may be conducted in the absence of a solvent, i.e. in bulk. However, when a solvent is used, suitable solvents include ethers, cyclic ethers, alkanes, cycloalkanes, aromatic hydrocarbons, halogenated hydrocarbons, acetonitrile, dimethylformamide and mixtures thereof , and supercritical solvents (such as CO₂). ATRP may also be conducted in accordance with known suspension, emulsion or precipitation methods. Suitable ethers include diethyl ether, ethyl propyl ether, dipropyl ether, methyl t-butyl ether, di-t-butyl ether, glyme (dimethoxyethane) diglyme (diethylene glycol dimethyl ether), etc. Suitable cyclic ethers include tetrahydrofuran and dioxane. Suitable alkanes include pentane, hexane, cyclohexane, octane and dodecane. Suitable aromatic hydrocarbons include benzene, toluene, o-xylene, m-xylene, p-xylene and cumene. Suitable halogenated hydrocarbons include dichloromethane, 1,2-dichloroethane and benzene substituted with 1 to 6 fluorine and/or chlorine atoms, although one should ensure that the selected halogenated hydrocarbon does not act as an initiator under the reaction conditions.

ATRP may be conducted in the gas phase (e.g. by passing the gaseous monomer(s) over a bed of the catalytic system), in a sealed vessel or in an autoclave. (Co)polymerizing may be conducted at a temperature of from about 0°C to 160°C, preferably from about 60°C to 120°C. Typically, the reaction time will be from about 30 minutes to 48 hours, more preferably from 1 to 24 hours. (Co)polymerizing may be conducted at a pressure of from about 0.1 to 100 atmospheres, preferably from 1 to 10 atmospheres.

According to another embodiment, ATRP may also be conducted in emulsion or suspension in a suspending medium for suspending the monomer(s) and while using the metal carbene complex of the invention in combination with a surfactant, in a way such as to form a (co)polymer emulsion or suspension. The suspending medium usually is an inorganic liquid, preferably water. In this embodiment of the invention, the weight ratio of the organic phase to the suspending medium is usually between 1:100 and 100:1, preferably between 1:10 and 10:1. If desired, the suspending medium may be buffered. Preferably the surfactant will be selected in order to control the stability of the emulsion, i.e. to form a stable emulsion.

In order to conduct polymerization in a heterogeneous medium (where the monomer/polymer is insoluble, or only slightly soluble, in the suspension medium, i.e. water or CO₂), the metal catalyst component should be at least partially soluble in the monomer/polymer. Thus, only when ligands are properly selected to allow the catalyst to meet this requirement, such as ligands containing long alkyl chains to increase catalyst solubility in hydrophobic monomers targeted for polymerization, is a successful, controlled ATRP polymerization obtained in the water-borne systems of this embodiment. From the above description of ligands coordinating the metal M in the catalytically active metal carbene complexes of the invention, those skilled in the art will be able to make a suitable selection.

A key component in the preparation of the stable emulsions of the present embodiment is the use of the surfactant to stabilize the initial monomer suspension/emulsion and growing polymer particles and to prevent unwanted coaguiation/floccuiation of the particles. In order to conduct ATRP in emulsion however, care should be taken to choose a surfactant which does not interfere with the catalyst or dormant chain end. Suitable surfactants include non-ionic, anionic, and cationic surfactants, with cationic and non-ionic surfactants being preferred in non-buffered solutions. Particularly preferred non-ionic surfactants include polyethylene glycol, polyoxyethylene oleyl ethers and polyoxythylene sorbitan monoalkyls. A preferred cationic surfactant is dodecyltrimethyl ammonium bromide. Regardless of the surfactant used, efficient stirring is preferred to obtain good dispersions or latexes.

The surfactant is usually present in a concentration of about 0.01% to 50% by weight based on the total weight of all components introduced into the polymerisation reactor, i.e. suspending medium, monomer(s), surfactant and catalytic system.

High solubility in the suspension medium is not a prerequisite for the initiator as demonstrated by the use of the poorly water soluble ethyl 2-bromoisobutyrate, to initiate the emulsion polymerizations. While any order of addition of the initiator and other reaction components can be used, however if the initiator is added to a pre-emulsified reaction mixture, stable latexes are usually obtained. Suitable initiators have been described herein-above in the solvent embodiment of the ATRP process. Initiators can also be macromolecules that contain radically transferable atoms or groups. A special type of such a macroinitiator may be water-soluble or even amphiphilic and may be, after initiation of the reaction, incorporated into the polymer particle and may stabilize the growing particle due to the hydrophilic segment of the macroinitiator.

After the (co)polymerizing step is complete, the polymer formed is isolated by known procedures, such as precipitating in a suitable solvent, filtering the precipitated polymer, then washing and drying the filtered polymer. Precipitation can be typically conducted using a suitable alkane or cycloalkane solvent, such as pentane hexane, heptane, cyclohexane or mineral spirits, or using an alcohol, such as methanol, ethanol or isopropanol, or any mixture of suitable solvents. The precipitated (co)polymer can be filtered by gravity or by vacuum filtration, e.g. using a Buchner funnel and an aspirator. The polymer can then be washed with the solvent used to precipitate the polymer, if desired. The steps of precipitating, filtering and washing may be repeated, as desired. Once isolated, the (co)polymer may be dried by drawing air through the (co)polymer, by vacuum. The dried (co)polymer can then be analyzed and/or characterized e.g. by size exclusion chromatography or NMR spectroscopy.

(Co)polymers produced by the catalytic process of the invention may be useful in general as molding materials (e.g. polystyrene) and as barrier or surface materials (e.g. polymethyl methacrylate). However, typically having more uniform properties than polymers produced by conventional radical polymerization, will be most suitable for use for specialized applications. For example, block copolymers of polystyrene (PSt) and polyacrylate (PA), e.g. PSt-PA-PSt triblock copolymers, are useful thermoplastic elastomers. Polymethylmethacrylate/acrylate triblock copolymers (e.g. PMMA-PA-PMMA) are useful, fully acrylic, thermoplastic elastomers. Homo- and copolymers of styrene, (meth)acrylates and/or acrylonitrile are useful plastics, elastomers and adhesives. Either block or random copolymers of styrene and a (meth)acrylate or acrylonitrile are useful thermoplastic elastomers having high solvent resistance. Furthermore, block copolymers in which blocks alternate between polar monomers and non-polar monomers produced by the present invention are useful amphiphilic surfactants or dispersants for making highly uniform polymer blends. Star (co)polymers, e.g. styrene-butadiene star block copolymers, are useful high-impact copolymers.

(Co)polymers produced by the catalytic process of the present invention typically have a number average molecular weight of from about 1,000 to 1,000,000, preferably from 5,000 to 250,000, and more preferably of from 10,000 to 200,000. Their structure, due to the high degree of flexibility of living radical polymerization, may include block, multi-block, star, gradient, random, hyperbranched, graft, "comb-like" and dendritic copolymers. Each of the these different types of copolymers will be described hereunder.

Because ATRP is a living polymerization process, it can be started and stopped, practically at will. Further, the polymer product retains the functional group X₁ necessary to initiate a further polymerization. Thus, in one embodiment, once a first monomer is consumed in the initial polymerizing step, a second monomer can then be added to form a second block on the growing polymer chain in a second polymerizing step. Further additional polymerizations with the same or different monomer(s) can be performed to prepare multi-block copolymers. Furthermore, since ATRP is also a radical polymerization, these blocks can be prepared in essentially any order.

(Co)polymers produced by the catalytic process of the present invention have a very low polydispersity index, i.e. the ratio M_{w}/Mₙ of their weight average molecular weight to their number average molecular weight is typically from about 1.1 to 1.9, preferably from 1.2 to 1.8.

Because the living (co)polymer chains retain an initiator fragment including X₁ as an end group, or in one embodiment as a substituent in a monomeric unit of the polymer chain, they may be considered as end-functional or in-chain functional (co)polymers. Such (co)polymers may thus be converted into (co)polymers having other functional groups (e.g. halogen can be converted into hydroxy or amino by known processes, and nitrile or carboxylic ester can be hydrolyzed to a carboxylic acid by known processes) for further reactions, including crosslinking, chain extension (e.g. to form long-chain polyamides, polyurethanes and/or polyesters), reactive injection molding, and the like.

If desired, removal of the transition metal catalyst from the polymerisation medium can be accomplished by the addition of a commercially available ion exchange resin such as is well known in the art. However, as explained hereinafter, it may also be desirable to modify the said catalyst into a dendrimeric material in order to facilitate its removal by ultra-filtration techniques.

In order to facilitate the use of the metal carbene compounds of the invention in heterogeneous catalytic reactions, the present invention further relates to derivatives of such compounds, being suitable for covalent bonding to a carrier and having one of the general formulae (IA) and (IB), wherein M, Z, R"', R_{1,} R_{2,} R_{3,} R₄ and y are as previously defined, except that R' and/or R" is replaced or substituted with a group having the formula:

-R₂₀-(CH₂)ₙ-D-Si-R₂₁R₂₂R₂₃ (VI),

wherein:
- R₂₀ is a radical selected from the group consisting of C₁₋₆ alkylene, arylene, heteroarylene and C₃₋₈ cycloalkylene, the said radical being optionally substituted with one or more R₂₄ substituents each independently selected from the group consisting of C₁₋₂₀ alkyl, C₂₋₂₀ alkenyl, C₂₋₂₀ alkynyl, C₁₋₂₀ carboxylate, C₁₋₂₀ alkoxy, C₂₋₂₀ alkenyloxy, C₂₋₂₀ alkynyloxy, C₂₋₂₀ alkoxycarbonyl, C₁₋₂₀ alkylsulfonyl, C₁₋₂₀ alkynylsulfinyl, C₁₋₂₀ alkylthio, aryloxy and aryl;
- D is a divalent atom or radical selected from the group consisting of oxygen, sulphur, silicon, arylene, methylene, CHR₂₄, C(R₂₄)₂, NH, NR₂₄ and PR₂₄;
- R₂₁, R₂₂ and R₂₃ are each independently selected from hydrogen, halogen or a R₂₄ substituent; and
- n is an integer from 1 to 20; provided that at least one of R₂₁, R₂₂ and R₂₃ is selected from the group consisting of C₁₋₂₀ alkoxy, C₂₋₂₀ alkenyloxy, C₂₋₂₀ alkynyloxy, C₂₋₂₀ alkoxycarbonyl, C₁₋₂₀ alkylsulfonyl, C₁₋₂₀ alkynylsulfinyl, C₁₋₂₀ alkylthio and aryloxy.
More preferred are such derivatives wherein R' is replaced or substituted with a 3-(triethoxysilyl)propyl group.

In another embodiment, the invention relates to a supported catalyst for use in a heterogeneous catalytic reaction, comprising the product of covalent bonding of (a) a derivative such as defined hereinabove, and (b) a carrier such as an inorganic oxide or an organic polymeric material. Preferably the said inorganic carrier is selected from silica, alumino-silica, natural and synthetic zeolites, or the said organic polymeric carrier is a polystyrene resin or a derivative thereof wherein the aromatic ring is substituted with one or more groups selected from C₁₋₆ alkyl, C₃₋₈ cycloalkyl, aryl and heteroaryl.

As previously mentioned, for the purpose of easier removal of the catalytic compound from the reaction medium, this invention also provides a dendrimeric material comprising two or more metal carbene compounds having any of the general formulae (IA), (IB), (IIA), (IIB), (IIIA) and (IIIB) previously described, each being attached to a core molecule (which is not to be confused with the carrier present in the supported catalyst embodiment of the invention), either directly or indirectly via a spacer molecule, by means of their N and/or or Z atoms and/or, when one of R', R" and R''' (or R" and R''' grouped together) bears a functional group, by means of the said functional group.

The core molecule is not critical to this aspect of the invention and is only limited by its reactivity with the metal carbene compound of interest or, when a spacer molecule is present in the dendrimeric material, with the said spacer molecule. For instance, the core molecule may be suitably selected from the group consisting of:
- aryl, polyaryl, heteropolyaryl, alkyl, cycloalkyl and heterocycloalkyl radicals, and
- groups having the formula A(R₂₀)ₙX₃₋ₙ, wherein A is an element of group IIIA of the Periodic Classification of Elements (preferably boron or aluminum) or nitrogen; or the formula G(R₂₀)ₙX₄₋ₙ, wherein G is an element of group IVA of the said Classification (preferably carbon, silicon or tin); or the formula J(R₂₀)ₙX₅₋ₙ, wherein J is an element of group VA other than nitrogen (i.e. preferably phosphorus, arsenic or antimony); or else the formula E(R₂₀)ₙX₂₋ₙ wherein E is an element from group VIA (preferably oxygen or sulfur), wherein in each of the said formulae X is hydrogen or halogen, and
- organic and inorganic transition metal compounds of any metal of groups IIB, IIIB, IVB, VB, VIB, VIIB and VIIIB of the Periodic Classification of Elements, e.g. titanium tetrachloride, vanadium trichloride, zirconium tetrachloride, C₁₋₆ alkyl titanates, vanadates, zirconates and the like.

When a spacer molecule is used in building up the dendrimeric material of the invention, the said spacer molecule is only limited by its reactivity with both the core the molecule and the metal carbene compound. For instance it may have the general formula R₂₀-(CH₂)-D wherein R₂₀, n and D are as previously defined.

The dendrimeric material of this invention may be produced by reacting a core molecule (such as defined hereinbefore) with a metal carbene compound

The dendrimeric material of this invention may thus be used as a catalyst for transforming a first olefin into at least one second olefin or into a linear olefin oligomer or polymer, the said catalyst being suitable for removal from the reaction mixture by ultra-filtration.

The present invention will now be further explained by reference to the following set of examples which should be understood as merely illustrating various embodiments of the invention without limiting the scope thereof.

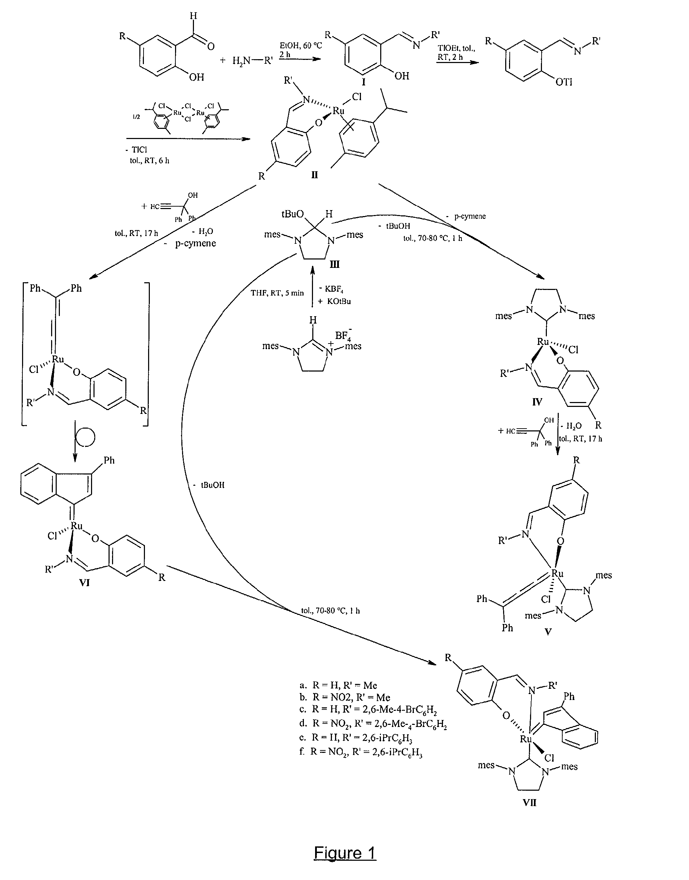

In the first place a general procedure for preparing ruthenium compounds having the general formula (IA) according to the present invention wherein y = 2 will be explained by reference to figure 1. First, a Schiff base ligand having the formula (I) - not to be confused with formulae (IA) and (IB) above - is prepared and purified using methods well known in the art, by condensing a salicylaldehyde with a primary amine having the formula H₂NR' at reflux temperature in an organic solvent. After cooling, the viscous yellow oily condensation product is purified by silica gel chromatography, thus yielding the desired salicylaldimine ligand of formula (I). In a second step, the Schiff base substituted ruthenium complex having the formula (II) - not to be confused with formulae (IIA) and (IIB) above - is prepared and purified, using methods well known in the art, by adding an organic solution of thallium ethoxide to an organic solution of the ligand of formula (I), then filtering the resulting solid under an inert atmosphere to quantitatively yield the respective thallium salt. An organic solution of the said salt was then reacted at room temperature with an organic solution of [RuCl₂(p-cumene)]₂. After filtering the thallium chloride by-product and evaporating the solvent, the residue was crystallized, washed and dried, thus resulting in the Schiff base ruthenium complex having the formula (II) appearing as a red-brownish solid.

Before performing the third step, an organic solution of the tert-butoxylated compound having the formula (III) - not to be confused with formulae (IIA) and (IIB) above -, wherein " mes " is an abbreviation standing for 2,4,6-trimethylphenyl, is prepared by adding an organic solution of potassium tert-butoxide to an organic solution of 1,3-bis(2,4,6-trimethylphenyl)-4,5-dihydroimidazolium tetrafluoroborate at room temperature, and then filtering off the potassium tetrafluoroborate by-product under inert atmosphere. A mixture of an organic solution of the complex of the formula (II) and an organic solution of the tert-butoxylated compound having the formula (III) was heated at 70-80°C for one hour. After evaporating the solvent, the solid residue was washed, recrystallized and dried under vacuum, thus resulting in the pure Schiff base substituted ruthenium complex having the formula (IV) as a brown microcrystalline solid. A pure Schiff base substituted allenylidene complex having the formula (V) is obtained as a dark brownish microcrystalline solid in a fourth step by adding an organic solution of the complex having the formula (IV) to an organic solution of diphenyl propargyl alcohol, stirring the mixture for 17 hours at room temperature, evaporating the solvent *in vacuo,* and then recrystallizing the remaining solid residue.

Following an alternative synthetic route, a Schiff base substituted indenylidene complex having the formula (VI) is obtained as a red-brownish microcrystalline solid by adding an organic solution of a ruthenium complex having the formula (II) to an organic solution of diphenyl propargyl alcohol, stirring the mixture for 17 hours at room temperature, evaporating the solvent *in vacuo,* and then recrystallizing the remaining solid residue. Then a Schiff base substituted ruthenium complex having the formula (VII) is prepared by first adding an organic solution of the tert-butoxylated compound having the formula (III) to an organic solution of the Schiff base substituted indenylidene complex having the formula (VI) and stirring the mixture for one hour at 70-80 °C. After evaporating the solvent, the solid residue was washed, recrystallized and subsequently dried under vacuum, thus resulting in the pure compound of the formula (VII) as a red-brownish microcrystalline solid.

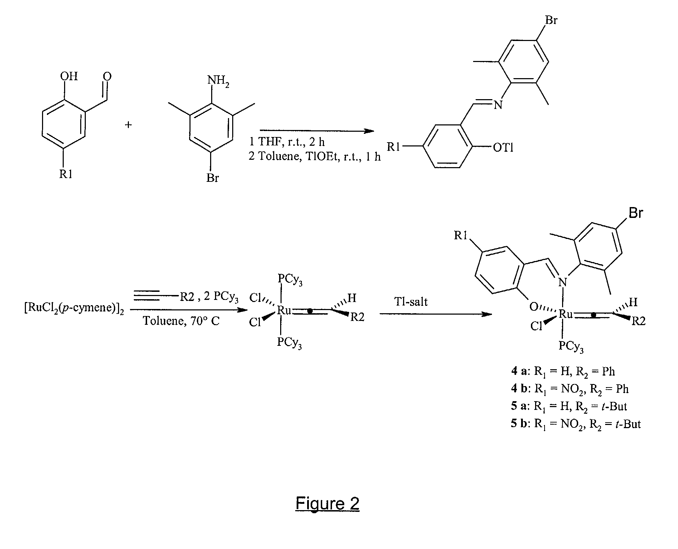

Secondly, a general procedure for preparing ruthenium compounds having the general formula (IC) according to the present invention wherein y = 2 will be explained by reference to figure 2. First, a Schiff base ligand having the formula (I) and its thallium salt are prepared as above. Separately, a dichlorodicyclohexylphosphino vinylidene ruthenium complex is prepared by reacting [RuCl₂(p-cumene)]₂ in a solvent with both dicyclohexylphosphine and a substituted acetylene at 70°C. Then, a solution of the resulting dark-brown microcrystalline solid is in turn reacted with the Schiff base thallium salt prepared above.

Although the various synthetic routes shown in the appended figures 1 and 2 have been described herein with respect to ruthenium complexes, the skilled person will be able to produce the corresponding complexes from other transition metals, such as osmium, iron, molybdenum, tungsten, titanium, rhenium, copper, chromium, manganese, rhodium, vanadium, zinc, gold, silver, nickel and cobalt, while making use of the above teaching and starting from the relevant metal complexes corresponding to [RuCl₂(p-cumene)]₂ and analogues thereof.

### EXAMPLE 1 - preparation of the Schiff base ligands of formulae (I.a) to (I.f)

Schiff base ligands having the formulae (I.a) to (I.f), wherein R and R' have the meanings indicated at the bottom of the appended figure and wherein Me stands for methyl while iPr stands for isopropyl, were prepared and purified as follows. Condensation of a salicylaldehyde with a primary aliphatic amine (i.e. R' being an aliphatic or cycloaliphatic radical) was carried out with stirring in tetrahydrofuran (hereinafter referred as THF) at reflux temperature for 2 hours. After cooling to room temperature, the viscous yellow oily condensation product was purified by silica gel chromatography and the desired salicylaldimine ligands - having formulae (I.a) and (I.b) - were obtained in yields of 95% and 93% respectively. Condensation of a salicylaldehyde with an aromatic primary amine was similarly carried out with stirring in ethanol at 80°C for 2 hours. Upon cooling to 0°C, a yellow solid precipitated from the reaction mixture. This solid was filtered, washed with cold ethanol and then dried *in vacuo* to afford the desired salicylaldimine ligands - having formulae (I.c) to (I.f) - in yields ranging from 90% to 93%. These ligands can be stored for months in a desiccator without suffering from physicochemical alteration.

Compound (I.c) was characterized by means of proton nuclear magnetic resonance (hereinafter referred as NMR) spectophotometry (performed on CDCl₃ at 25°C) as follows: δ 12.85 (s, 1H); 8.32 (s, 1H), 7.45 (d, *J* = 7.0 Hz, 1H), 7.30 (t, *J* = 7.1 Hz, 1H), 7.03 (s, 2H), 6.99 (t, *J* = 7.3 Hz, 1H), 6.84 (d, J = 6.9 Hz, 1H) and 2.21 (s, 6H).

Compound (I.d) was further characterized by means of proton NMR spectophotometry (performed on CDCl₃ at 25°C) as follows: δ 13.93 (s, 1H), 8.43 (s, 1H), 8.33 (d, J = 3 Hz, 1H), 8.29 (d, J = 9 Hz, 1 H), 7.26 (s, 2H), 7.12 (d, J = 9 Hz, 1H) and 2.18 (s, 6H).

### EXAMPLE 2 - preparation of Schiff base substituted ruthenium complexes of formulae (II.a) to (II.f)

Schiff base substituted ruthenium complexes having formulae (II.a) to (II.f) as shown in the appended figure were prepared in two steps and purified as follows. In a first step, to a solution in THF (10 ml) of the appropriate Schiff base of formula (I.a) to (I.f) prepared according to example 1, a solution of thallium ethoxide in THF (5 ml) was added dropwise at room temperature. Immediately after addition, a pale yellow solid formed and the reaction mixture was stirred for 2 hours at 20°C. Filtration of the solid under an argon atmosphere provided the respective salicylaldimine thallium salt in quantitative yield, which was immediately used in the next step without further purification.

To a solution of the said salicylaldimine thallium salt in THF (5 ml) was added a solution of [RuCl₂(p-cymene)]₂ in THF (5 ml), then the reaction mixture was stirred at room temperature (20°C) for 6 hours. The thallium chloride by-product was removed via filtration. After evaporation of the solvent, the residue was dissolved in a minimal amount of toluene and cooled to 0°C. The crystals obtained were then washed with cold toluene (3 x 10 ml) and dried, resulting in the Schiff base ruthenium complexes of formulae (II.a) to (II.f) as red-brownish solids.

### EXAMPLE 3 - preparation of Schiff base substituted ruthenium complexes of formulae (IV.a) to (IV.f)

After adding 1 equivalent of a potassium tert-butoxide solution in THF (5 ml) to a solution of 1,3-bis(2,4,6-trimethylphenyl)-4,5-dihydroimidazolium tetrafluoroborate in THF (10 ml), and stirring the reaction mixture for 5 minutes at room temperature (20°C), the potassium tetrafluoroborate by-product was filtered off under inert atmosphere and the t-butoxylated compound having formula (III) appeared in quantitative yield. After evaporation of the solvent, compound (III) was dissolved in toluene (10 ml) and immediately used in the next step without further purification. After addition of 1 equivalent of a solution of the appropriate Schiff base substituted ruthenium complex having one of formulae (II.a) to (II.f), prepared according to example 2, in toluene (10 ml), heating the reaction mixture at 70-80 °C was effected for one hour under vigorous stirring. After evaporation of the solvent, the solid residue was washed with hexane (3 x 10 ml) and recrystallized from a toluene/pentane mixture at 0°C. Subsequent drying under vacuum resulted in the formation of the pure Schiff base substituted ruthenium complexes of formulae (IV.a) to (IV.f) as brownish microcrystalline solids in yields ranging between 90% and 95%.

### EXAMPLE 4 - preparation of Schiff base substituted ruthenium complexes of formulae (V.a) to (V.f)

Schiff base substituted allenylidene compounds having the formulae (V.a) to (V.f) were obtained by adding a solution of the appropriate Schiff base substituted ruthenium complex having one of formulae (IV.a) to (IV.f), prepared according to example 3, in toluene (15 ml) to 1.2 equivalents of a solution of the commercially available diphenyl propargyl alcohol in toluene (5 ml), and then stirring the reaction mixture for 17 hours at room temperature (20°C). Toluene was evaporated *in vacuo* and the remaining solid residue was recrystallized from a dichloromethane/hexane mixture and washed with hexane (3 x 10 ml) to provide the desired compounds as dark brown microcrystalline solids in yields ranging between 80% and 90%.

### EXAMPLE 5 - preparation of Schiff base substituted ruthenium complexes of formulae (VI.a) to (VI.f)

Schiff base substituted indenylidene complexes of formulae (VI.a) to (Vl.f) were obtained by adding a solution of the appropriate Schiff base substituted ruthenium complex having one of formulae (II.a) to (II.f), prepared according to example 2, in toluene (15 ml) to 1.2 equivalents of a solution of the commercially available diphenyl propargyl alcohol in toluene (5 ml), and then stirring the reaction mixture for 17 hours at room temperature (20°C). Toluene was evaporated *in vacuo* and the remaining solid residue was recrystallized from a dichloromethane/hexane mixture and washed with hexane (3 x 10 ml) to provide the desired compounds as red-brownish microcrystalline solids in yields higher than 70%.

### EXAMPLE 6 - preparation of Schiff base substituted ruthenium complexes of formulae (VII.a) to (VII.f)

To a solution of the appropriate Schiff base substituted ruthenium complex having one of formulae (VI.a) to (Vl.f), prepared according to example 5, in toluene (10 ml) was added 1 equivalent of a solution of the t-butoxylated compound having formula (III), as prepared in example 3, in toluene (10 ml). Vigorous stirring of the reaction mixture was then effected for one hour at 70-80°C. After evaporation of the solvent, the solid residue was washed with hexane (3 x 10 ml) and recrystallized from a dichloromethane/hexane mixture. Subsequent drying under vacuum resulted in the formation of the pure compounds of formulae (VII.a) to (VII.f) as red-brownish microcrystalline solids in quantitative yield.

### EXAMPLE 7 - ring opening metathesis polymerisation

Ring opening metathesis polymerisation of various cyclic olefins was performed in 1 ml toluene as a solvent, while using 0.005 mmole of the Schiff base substituted allenylidene compound having the formula (V.a) prepared in example 4 as the catalyst. The following table 1 indicates the name of the olefin monomer, molar ratio olefin/catalyst, polymerisation temperature T (expressed in °C) and polymerisation time t (expressed in minutes) and also provides the polymerisation yield at time t (expressed in %).

**Table 1**

| Monomer | Ratio | T°C | t | yield |
|---|---|---|---|---|
| norbornene | 2,000 | 20 | 2 | 100 |
| butylnorbornene | 2,000 | 20 | 2 | 100 |
| hexylnorbornene | 2,000 | 20 | 2 | 100 |
| decylnorbornene | 2,000 | 20 | 2 | 100 |
| ethylidenenorbornene | 2,000 | 80 | 60 | 100 |
| Phenylnorbornene | 2,000 | 80 | 60 | 100 |
| cyclohexenylnorbornene | 2,000 | 80 | 60 | 100 |
| ethyltetracyclododecene | 2,000 | 80 | 60 | 100 |
| chloromethylnorbornene | 2,000 | 80 | 60 | 100 |
| triethoxysilylnorbornene | 2,000 | 80 | 60 | 100 |
| Tetrahydroindenylnorbornene | 2,000 | 80 | 60 | 100 |
| cyanonorbornene | 800 | 80 | 240 | 100 |
| hydroxymethylnorbornene | 800 | 80 | 240 | 100 |
| vinylnorbornene | 800 | 80 | 120 | 100 |
| cyclopentene | 800 | 20 | 3 | 100 |
| cyclooctene | 80,000 | 80 | 240 | 100 |
| cyclooctene | 80,000 | 20 | 240 | 58 |
| cyclooctene | 80,000 | 4 | 1,440 | 31 |
| cyclooctene | 300,000 | 80 | 240 | 92 |
| cyclooctene | 300,000 | 20 | 240 | 36 |
| 3,4-epoxycyclooctene | 800 | 80 | 120 | 100 |
| 5,6-epoxycyclooctene | 800 | 80 | 120 | 34 |
| Polyethyleneglycolnorbornene | 800 | 80 | 120 | 92 |

### EXAMPLE 8 - ring closing metathesis reaction

The ring closing metathesis reaction of various dienes was performed in 1 ml deuterated benzene as a solvent (except for diallylamine hydrochloride, for which the solvent used was deuterated methanol), while using:
- 0.005 mmole of the Schiff base substituted allenylidene compound having the formula (V.a) prepared in example 4 as the catalyst, and
- a molar ratio diene/catalyst equal to 100.

The following table 2 indicates the name of the diene involved, the reaction temperature T (expressed in °C), the reaction time t (expressed in minutes) and also provides the reaction yield at time t (expressed in %).

**Table 2**

| Diene | T°C | t | yield |
|---|---|---|---|
| 1,7-octadiene | 20 | 60 | 100 |
| Diethyldiallylmalonate | 20 | 60 | 100 |
| diallylether | 20 | 60 | 100 |
| diallylphtalate | 65 | 240 | 96 |
| linalool | 65 | 240 | 91 |
| Diallylamine hydrochloride | 20 | 240 | 84 |
| 4,4-dicarbethoxy-2-methyl-1,6-heptadiene | 20 | 360 | 81 |
| 4,4-dicarbethoxy-2,6-dimethyl-1,6-heptadiene | 20 | 360 | 72 |

### EXAMPLE 9 - atom transfer radical polymerisation

The atom transfer radical polymerisation of various olefins was performed in 1 ml toluene during 8 hours at the temperature (expressed in °C) indicated below and while using:
- as a catalyst, 0.0116 mmole of the Schiff base substituted allenylidene ruthenium complex having the formula (V.a) as prepared in example 4,
- as an initiator, ethyl-2-methyl-2-bromopropionate (when the monomer is a methacrylate), methyl-2-bromopropionate (when the monomer is an acrylate), 1-bromocyanoethane (when the monomer is acrylonitrile) or (1-bromoethyl)benzene (when the monomer is styrene), and
- a molar ratio [catalyst]/[initiator]/[monomer] equal to 1:2:800.
The following table 3 indicates the name of the olefin involved, the polymerisation temperature and the polymerisation yield (expressed in %).

**Table 3**

| Olefin | Yield | Temperature |
|---|---|---|
| methylmethacrylate | 97 | 85 |
| isobutylmethacrylate | 35 | 85 |
| methylacrylate | 84 | 85 |
| butylacrylate | 62 | 85 |
| acrylonitrile | 26 | 65 |
| styrene | 98 | 110 |

### EXAMPLE 10 - atom transfer radical polymerisation in water

The atom transfer radical polymerisation of various olefins was performed in water as a solvent, while using:
- as a catalyst, 0.0116 mmole of the Schiff base substituted allenylidene compound having the formula (V.a) prepared in example 4, which has been treated with 1 equivalent of silver tetrafluoroborate (thus resulting in a cationic ruthenium complex), and
- the same initiators as already mentioned in example 9, and
- a [catalyst]/[initiator]/[monomer] molar ratio equal to 1:2:800,
at the temperature indicated in the table below and during 8 hours. The catalyst and the initiator are dissolved in toluene, the volume ratio toluene:water being 1:1. The following table 4 indicates the name of the olefin involved, the polymerisation temperature and the polymerisation yield (expressed in %).

**Table 4**

| Olefin | Yield | Temperature |
|---|---|---|
| methylmethacrylate | 73 | 85 |
| isobutylmethacrylate | 17 | 85 |
| methylacrylate | 70 | 85 |
| butylacrylate | 34 | 85 |
| acrylonitrile | 16 | 65 |
| styrene | 76 | 85 |

### EXAMPLE 11 - atom transfer radical (co)polymerisation of vinyl monomers

The atom transfer radical polymerisation and copolymerisation of various vinyl monomers was performed while using:
- the same initiators as already used in example 9, and
- as a catalyst, a ruthenium carbene complex (A.a) to (A.f), being a compound previously disclosed as an olefin metathesis catalyst by Chang et al. in *Organometallics* (1998) 17:3460 and having one of the formulae: 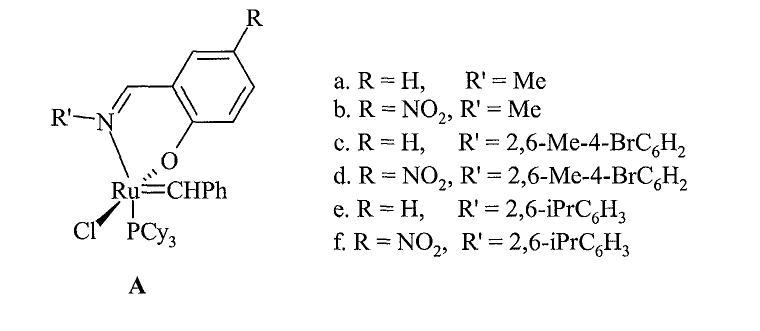
wherein Cy stands for cyclohexyl, Ph stands for phenyl, Me stands for methyl and iPr stands for isopropyl.

A typical procedure for this purpose is as follows: polymerisation was carried out under argon atmosphere in a sealed glass vial. 0.0117 mmole of the catalyst was placed in a glass tube (in which the air was expelled by three vacuum-nitrogen cycles) containing a magnet bar and capped by a three-way stopcock. Then the monomer and initiator were added so that the molar ratios [catalyst]/[initiator]/[monomer] were 1/2/800. All liquids were handled under argon with dried syringes. The reaction mixture was then heated for 17 hours at a reaction temperature of 85°C (for (meth)acrylates) or 110°C (for styrene). After cooling, it was diluted in THF and poured in 50 ml n-heptane (for (meth)acrylates) or 50 ml methanol (for styrene) under vigorous stirring. The precipitated polymer was then filtered and dried in vacuum overnight.

Table 5 below indicates the polymerisation yield as a function of the monomer and the catalytic ruthenium complex being used.

**Table 5**

| Monomer | A.a | A.b | A.c | A.d | A.e | A.f |
|---|---|---|---|---|---|---|
| methyl methacrylate | 5 | 5 | 11 | 28 | 7 | 10 |
| isobutyl methacrylate | 5 | 5 | 9 | 19 | 5 | 7 |
| methyl acrylate | 5 | 5 | 12 | 26 | 8 | 9 |
| butyl acrylate | 5 | 5 | 9 | 16 | 5 | 7 |
| styrene | 10 | 16 | 74 | 88 | 56 | 65 |

Table 6 indicates the weight average molecular weight M_{w}, the number average molecular weight Mₙ and the polydispersity index (PDI) of homopolymers formed with a ruthenium carbene complex (A.c) to (A.f) from methyl acrylate (first figure), styrene (second figure) or methyl methacrylate (third figure) respectively.

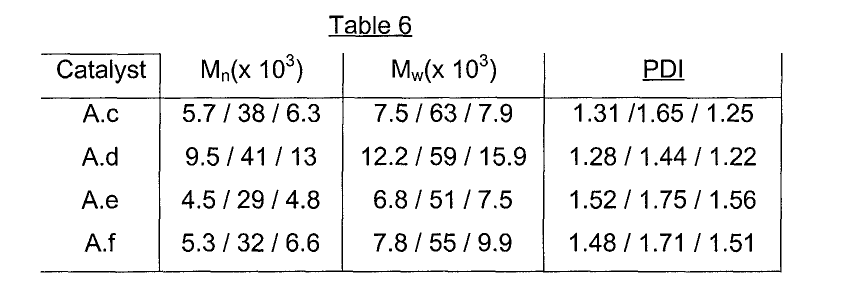

### EXAMPLE 12 - atom transfer radical (co)polymerisation of vinyl monomers in the presence of a cationic ruthenium complex

The atom transfer radical polymerisation and copolymerisation of various vinyl monomers was performed in a solvent S while using:
- the same initiator as already used in example 9, and
- as a catalyst, a cationic ruthenium carbene complex (B.a) to (B.f), being obtained by treating the ruthenium carbene complex of example 11, having the appropriate formula (A.a) to (A.f), with a salt according to the following scheme, wherein Tos is an abbreviation for tosylate and Tf is an bbreviation for triflate:

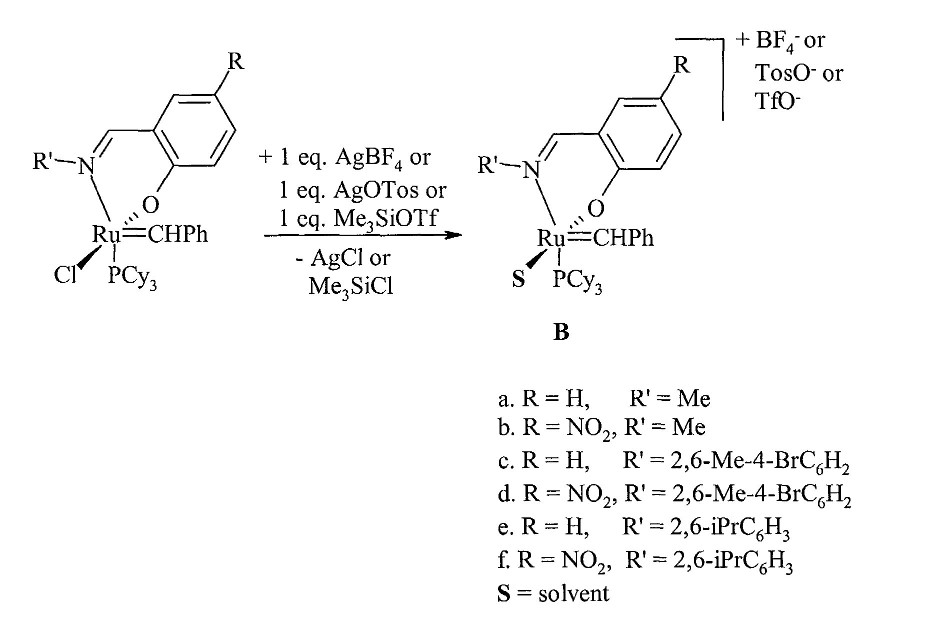

When toluene was used as a solvent, the monomer, the initiator and the catalyst were dissolved in a small amount of toluene so that the monomer/toluene ratio was 1/1 (volume/volume). For suspension polymerization in water/toluene mixtures, the monomer, initiator and catalyst were dissolved in a small amount of toluene, and distilled water was added to the organic solution so that the monomer/toluene ratio was 1/3.5 (volume/volume) and the water/organic phase ratio was 1/1 (volume/volume). No dispersant or surfactant (particle stabilizer) was added to the polymerisation medium.

In order to assess the influence of the counter-ion on the catalytic activity, three different salts (silver tetrafluoroborate, silver tosylate and trimethylsilyltriflate) were used to abstract a chloride from the complexes (A.a) to (A.f).

Table 7 below indicates polymerisation yields, as a function of the monomer, solvent and cationic catalytic ruthenium complex being used, of methyl acrylate (first figure), styrene (second figure) or methyl methacrylate (third figure) respectively.

**Table 7**

| Methyl acrylate / Styrene / Methyl methacrylate | | | | | | |
|---|---|---|---|---|---|---|
| water | | | | toluene | | |
| Catalyst | AgBF₄ | AgOTos | Me₃SiOTf | AgBF₄ | AgOTos | Me₃SiOTf |
| B.a | 6/16/5 | 5/8/5 | 5/5/5 | 11/22/8 | 8/15/5 | 5/9/5 |
| B.b | 6/17/5 | 5/11/5 | 5/8/5 | 14/26/11 | 12/21/7 | 8/14/5 |
| B.c | 64/85/61 | 51/69/43 | 21/53/14 | 78/95/71 | 64/86/59 | 36/72/32 |
| B.d | 68/91/67 | 62/84/55 | 36/69/32 | 81/98/77 | 71/92/68 | 51/87/48 |
| B.e | 11/49/7 | 9/40/5 | 5/36/5 | 16/66/12 | 16/61/11 | 11/57/8 |
| B.f | 13/53/11 | 13/46/8 | 5/41/5 | 21/74/18 | 16/70/13 | 11/67/9 |

Table 8 below indicates the weight average molecular weight M_{w}, number average molecular weight Mₙ and polydispersity index (PDI) of homopolymers formed with a cationic ruthenium carbene complex (B.b) from methyl acrylate (first figure), styrene (second figure) or methyl methacrylate (third figure) respectively.

**Table 8**

| Methyl acrylate / Styrene / Methyl methacrylate | | | | | | |
|---|---|---|---|---|---|---|
| water | | | | toluene | | |
| AgBF₄ | | AgOTos | Me₃SiOTf | AgBF₄ | AgOTos | Me₃SiOTf |
| Mₙ(10³) | 29/46/33 | 27/41/26 | 16.5/36/18 | 42/56/46 | 39/54/43 | 28/61/32 |
| M_{w}(10³ | 40/68/44 | 41/64/38 | 27/59/28 | 70/96/67 | 67/98/66 | 50/113/52 |
| PDI | 1.37/1.48/ | 1.52/1.56/ | 1.64/1.65/ | 1.66/1.71/ | 1.73/1.81/ | 1.77/1.86/ |
| | 1.34 | 1.45 | 1.58 | 1.46 | 1.54 | 1.64 |

### EXAMPLE 13 - atom transfer radical addition of vinyl olefins

The atom transfer radical addition of carbon tetrachloride onto various vinyl olefins was performed in an organic solvent, while using the Schiff base substituted allenylidene compound having the formula (V.a), as prepared in example 4, as the catalyst. The said catalyst (0.03 mmole) was dissolved in toluene (1 ml) and subsequently added through a septum to the solution of the vinyl monomer (9 mmoles) and carbon tetrachloride (13 mmoles) in toluene (3 ml). The reaction mixture was then heated at 65°C for 17 hours. The following table 9 indicates the name of the vinyl monomer tested and the yield (expressed in %) of the resulting chlorinated saturated addition product.

**Table 9**

| Vinyl olefin | Yield |
|---|---|
| Methyl methacrylate | 76 |
| Isobutyl methacrylate | 57 |
| Methyl acrylate | 83 |
| Butyl acrylate | 61 |
| acrylonitrile | 55 |
| styrene | 92 |

### EXAMPLE 14 - preparation of dichlorodicyclohexylphosphine vinylidene ruthenium complexes

To a suspension of [RuCl₂(p-cymene)]₂ (306 mg, 0.5 mmole) in toluene (17 ml) were added respectively tricyclohexylphosphine (0.617 g, 2.2 mmole) and phenylacetylene C₆H₅C≡CH (0.102 g, 1 mmole). The mixture was slowly heated to 70°C and stirred for 24 hours. The mixture was concentrated to about 4 ml by pumping the volatile materials. Addition of 10 ml acetone and cooling to -78°C led to the precipitation of a dark brown microcrystalline solid which was filtered off and vacuum dried. This solid, obtained with a yield of 85%, was characterized as being Cl₂Ru{=C=CHC₆H₅}(PCy₃)₂ by means of proton NMR spectophotometry (performed on CDCl₃ at 30°C) providing the following data: δ 7.16-7.08, 6.97-6.88 (both m, 5 H, phenyl), 4.65 (t, *J*_{PH} = 3.3 Hz, 1H), 2.83-2.71, 2.26-2.12, 1.77-1.45, 1.28-1.01 (each m, C₆H₁₁).

A similar procedure was used for preparing Cl₂Ru{=C=CH*ter*C₄H₉}(PCy₃)₂, however with a molar excess of terbutylacetylene and while keeping the reaction mixture at 40°C during the first 4 hours. The resulting ruthenium complex, obtained with a yield of 69%, was characterized by means of proton NMR spectophotometry (performed on CDCl₃ at 30°C) providing the following data: δ 2.81 (t, *J*_{PH} = 3.0 Hz, 1H), 2.65-2.51, 2.14-1.99, 1.86-1.53, 1.33-1.12 (each m, 66H, C₆H₁₁) and 1.01 (s, 9H).

### EXAMPLE 15 - preparation of Schiff base vinylidene ruthenium complexes

To a solution of a dichlorodicyclohexylphosphine vinylidene ruthenium complex obtained in example 14 (3 mmole) in THF (5 ml) was added a solution in THF (10 ml) of a salicylaldimine thallium salt obtained at the end of the first step of example 2. This reaction mixture was stirred at 20°C for 4 hours and thallium chloride formed was removed via filtration. The solid residue was recrystallized from pentane at - 70°C to result in a Schiff base vinylidene ruthenium complex having the formula (IC).

Four different complexes were produced according to this procedure. The complex identified as **4a** in figure 2, i.e. wherein R is hydrogen and R₃ is phenyl, was recovered as a brown solid with a yield of 81% and was characterized by means of proton NMR spectophotometry (performed on C₆D₆ at 25°C) providing the following data: δ 8.20 (d, *J* = 5.2 Hz, 1H), 7.38 (d, *J* = 7.0 Hz, 1H), 7.30 (t, *J* = 7.2 Hz, 1H), 7.22-7.14, 6.99-6.94, 6.89-6.79 (each m, 5H), 7.13 (s, 2H), 7.06 (t, *J* = 7 Hz, 1H), 4.36 (t, *J* = 4.2 Hz), 2.14 (s, 3H), 1.61-1.31 (m, 20H), 1.27 (d, *J* = 6 Hz, 3H) and 1.19 (m, 10H).

The complex identified as **4b** in figure 2, i.e. wherein R is nitro and R₃ is phenyl, was recovered as a dark brown solid with a yield of 80% and was characterized by means of proton NMR spectophotometry (performed on C₆D₆ at 25°C) providing the following data: δ 8.24 (d, *J* = 2.5 Hz, 1H), 8.08 (dd, *J* =9 Hz, 2.4 Hz, 1H), 7.94 (d, *J* = 5.6 Hz, 1H), 7.56 (t, *J* =7.5 Hz, 1H), 7.29 (d, *J* = 9.8 Hz, 1H), 7.16 (s, 2H), 7.13-7.07 (o-H), 7.02-6.96 (p-H), 6.89-6.80 (m-H) (each m, 5H), 4.25 (t, *J* = 5 Hz), 2.44 (q, *J* = 11 Hz, 3H), 2.34 (s, 3H), 1.70-1.63 (bs, 20H), 1.54 (d, *J* = 12 Hz, 3H) and 1.36-1.08 (bs, 20H).

The complex identified as **5a** in figure 2, i.e. wherein R is hydrogen and R₃ is tert-butyl, was recovered as a dark brown solid with a yield of 78% and was characterized by means of proton NMR spectophotometry (performed on C₆D₆ at 25°C) providing the following data: δ 8.28 (d, *J*= 2.7Hz, 1H), 7.42 (d, *J* = 7.2 Hz, 1H), 7.23 (t, *J* = 7.0 Hz, 1H),7.06 (m, 3H), 6.74 (d, *J* = 6.7 Hz, 1H), 2.83 (t, *J* = 3 Hz), 1.78-1.50 (m, 23H), 1.26-1.15 (m, 10H) and 1.08 (s, 9H).

The complex identified as **5b** in figure 2, i.e. wherein R is nitro and R₃ is tert-butyl, was recovered as a brown solid with a yield of 70% and was characterized by means of proton NMR spectophotometry (performed on C₆D₆ at 25°C) providing the following data: δ 8.30 (d, *J* = 2.9 Hz, 1H), 7.6 (dd, *J*= 9, 2.3 Hz, 1H), 7.37 (d, *J* =5 Hz, 1H), 7.13 (s, 2H), 6.99 (d, *J* = 9.8 Hz, 1H), 3.06 (t, *J* = 4 Hz), 2.50 (q, *J*=12 Hz, 3H), 2.38 (s, 3H), 1.88-1.75 (bs, 20H), 1.60 (d, *J* = 12.5 Hz, 3H), 1.34-25 (m, 10H) and 1.07 (s, 9H).

### EXAMPLE 16 - ring opening metathesis polymerization of cyclic olefins

Ring opening metathesis polymerization of the cyclic olefins identified by a formula and a reference number from **6** to **17** in the scheme hereunder was performed according to the following procedure.

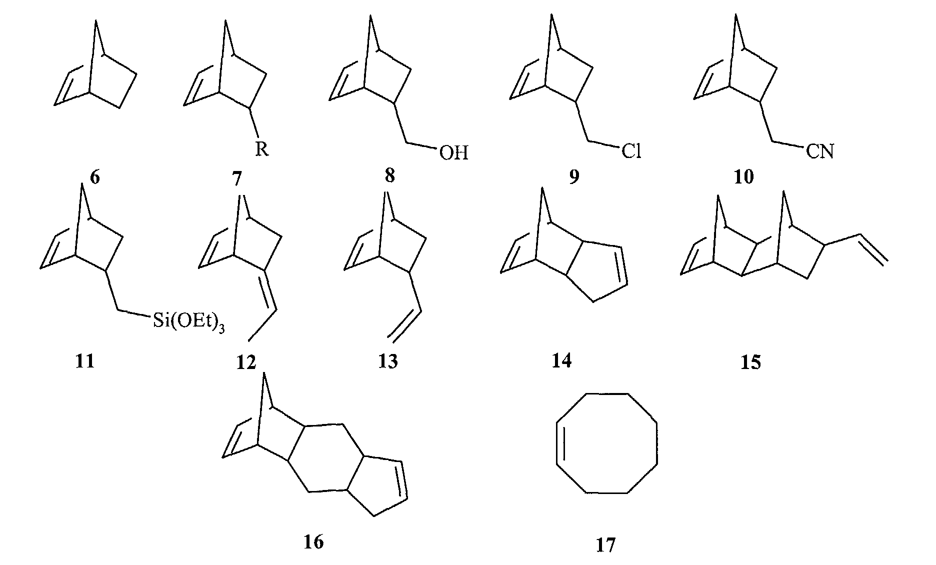

Monomer **6** , i.e. norbornene (7.5 mmole), was dissolved in CH₂Cl₂ (2.0 ml) and admixed in a vessel with a solution of a Schiff base vinylidene ruthenium complex prepared according to example 15 (7.5 µmole) in CH₂Cl₂ (2 ml). Then the vessel was flushed with argon and kept at a constant temperature of 80 °C in an oil bath. After 2 hours the mixture, which became very viscous and could not be stirred anymore, was transferred into a beaker and treated with CH₂Cl₂ (10 ml) containing 2.6-di-*tert*-butyl-4-methylphenol (0.4 mmole) as an oxidation inhibitor and ethylvinylether (4 mmole) as a terminating agent. The resulting solutions were stirred for one hour and, after filtration through a silica gel column, precipitated into vigorously stirred methanol. The resulting white tacky polymer was filtrated, washed with methanol and dried under vacuum.

For other cyclic olefins, the experimental procedure was similar but the amount of monomer used was changed to 6 mmole (monomers **7** to **16**) or 1.87 mmole (monomer **17**).

The following table 10 successively indicates, after the experiment number (first column), the Schiff base vinylidene ruthenium complex used as a catalyst (using the same identification number as in example 15), the monomer reference number from **6** to **17** (followed, between brackets, by the molar monomer/catalyst ratio), polymerization temperature, time and yield, average number molecular weight Mₙ and polydispersity M_{w}/Mₙ, both determined by gel permeation chromatography using polystyrene standard.

**Table 10**

| Exp. | catalyst | monomer (ratio) | temp. (°C) | time (hours) | yield (%) | Mₙ (x 10³) | M_{w}/Mₙ |
|---|---|---|---|---|---|---|---|
| 1 | 4a | 6 (1000) | 80 | 0.5 | 97 | 476 | 1.53 |
| 2 | 4b | 6 (1000) | 80 | 0.5 | 99 | 346 | 1.60 |
| 3 | 4a | 6 (1000) | 20 | 10 | 100 | 368 | 1.46 |
| 4 | 4b | 6 (1000) | 20 | 10 | 100 | 329 | 1.49 |
| 5 | 4a | 7 (800) R = ethyl | 80 | 2 | 89 | 102 | 2.66 |
| 6 | 4b | 7 (800) R = ethyl | 80 | 2 | 100 | 89 | 2.12 |
| 7 | 4a | 7 (800) R = butyl | 80 | 2 | 100 | 443 | 2.10 |
| 8 | 4b | 7 (800) R = butyl | 80 | 2 | 100 | 372 | 2.25 |
| 9 | 4a | 7 (800) R = hexyl | 80 | 2 | 82 | 257 | 1.85 |
| 10 | 4b | 7 (800) R = hexyl | 80 | | 84 | 230 | 1.87 |
| 11 | 4a | 7 (800) R = decyl | 80 | 2 | 83 | 543 | 2.44 |
| 12 | 4b | 7 (800) R = decyl | 80 | 2 | 100 | 556 | 2.54 |

| Exp. | catalyst | Monomer (ratio) | Temp. | time | Yield (%) | Mₙ(x 10³) | M_{w}/Mₙ |
|---|---|---|---|---|---|---|---|
| 13 | 4a | 7 (800) R = phenyl | 80 | 2 | 74 | 223 | 2.01 |
| 14 | 4b | 7 (800) R = phenyl | 80 | 2 | 80 | 209 | 1.98 |
| 15 | 4a | 7 (800) R=cyclohexenyl | 80 | 2 | 73 | 350 | 1.93 |
| 16 | 4b | 7 (800) R=cyclohexenyl | 85 | 2 | 77 | 397 | 2.33 |
| 17 | 4a | 8 (800) | 80 | 4 | 10 | 78 | 2.75 |
| 18 | 4b | 8 (800) | 80 | 4 | 16 | 65 | 2.30 |
| 19 | 4a | 9 (800) | 80 | 4 | 78 | 189 | 2.44 |
| 20 | 4b | 9 (800) | 80 | 4 | 89 | 175 | 2.31 |
| 21 | 4a | 11 (800) | 80 | 4 | 71 | 503 | 2.17 |
| 22 | 4b | 11 (800) | 80 | 4 | 79 | 479 | 2.08 |
| 23 | 4a | 12 (800) | 80 | 10 | 100 | 398 | 1.99 |
| 24 | 4b | 12 (800) | 80 | 10 | 100 | 379 | 2.03 |
| 25 | 4a | 13 (800) | 80 | 10 | 5 | - | - |
| 26 | 4a | 14 (800) | 80 | 10 | 95 | ^{d} | |
| 27 | 4b | 14 (800) | 80 | 10 | 96 | ^{d} | |
| 28 | 4a | 15 (800) | 80 | 4 | 100 | 35 | 3.21 |
| 29 | 4b | 15 (800) | 80 | 4 | 100 | 30 | 3.17 |
| 30 | 4a | 16 (800) | 80 | 10 | 100 | ^{d} | |
| 31 | 4b | 16 (800) | 80 | 10 | 100 | ^{d} | |
| 32 | 4a | 17 (250) | 80 | 15 | 10 | 347 | 1.71 |
| 33 | 4b | 17 (250) | 80 | 15 | 15 | 305 | 1.84 |

| Exp. | catalyst | monomer (ratio) | temp. (°C) | time (h) | yield (%) | Mₙ (x 10³) | M_{w}/Mₙ |
|---|---|---|---|---|---|---|---|
| 34 | 5a | 6 (1000) | 80 | 0.5 | 100 | 485 | 1.33 |
| 35 | 5b | 6 (1000) | 80 | 0.5 | 100 | 372 | 1.45 |
| 36 | 5a | 6 (1000) | 20 | 10 | 100 | 413 | 1.40 |
| 37 | 5b | 6 (1000) | 20 | 10 | 100 | 403 | 1.48 |
| 38 | 5a | 7 (800) R = ethyl | 80 | 2 | 100 | 149 | 2.64 |
| 39 | 5b | 7 (800) R = ethyl | 80 | 2 | 100 | 196 | 1.91 |
| 40 | 5a | 7 (800) R = butyl | 80 | 2 | 100 | 470 | 2.30 |
| 41 | 5b | 7 (800) R = butyl | 80 | 2 | 100 | 312 | 2.07 |
| 42 | 5a | 7 (800) R = hexyl | 80 | 2 | 95 | 227 | 1.85 |
| 43 | 5b | 7 (800) R = hexyl | 80 | | 98 | 242 | 1.76 |
| 44 | 5a | 7 (800) R = decyl | 80 | 2 | 100 | 443 | 2.09 |
| 45 | 5b | 7 (800) R = decyl | 80 | 2 | 100 | 522 | 1.80 |
| 46 | 5a | 7 (800) R =phenyl | 80 | 2 | 100 | 210 | 1.86 |
| 47 | 5b | 7 (800) R =phenyl | 80 | 2 | 100 | 224 | 1.78 |
| 48 | 5a | 7 (800) R=cyclohexenyl | 80 | 2 | 77 | 350 | 2.50 |
| 49 | 5b | 7 (800) R=cyclohexenyl | 80 | 2 | 82 | 378 | 2.60 |
| 50 | 5a | 8 (800) | 80 | 4 | 34 | 89 | 2.84 |
| 51 | 5b | 8 (800) | 80 | 4 | 55 | 67 | 2.56 |

| Exp. | catalyst | Monomer (ratio) | Temp | time | Yield (%) | Mₙ(x10³) | M_{w}/Mₙ |
|---|---|---|---|---|---|---|---|
| 52 | 5a | 9 (800) | 80 | 4 | 100 | 143 | 2.32 |
| 53 | 5b | 9 (800) | 80 | 4 | 100 | 128 | 2.26 |
| 54 | 5b | 10 (800) | 80 | 10 | 8 | 89 | 1.67 |
| 55 | 5a | 11 (800) | 80 | 4 | 91 | 583 | 2.07 |
| 56 | 5b | 11 (800) | 80 | 4 | 99 | 565 | 1.81 |
| 57 | 5a | 12 (800) | 80 | 10 | 100 | 398 | 2.12 |
| 58 | 5b | 12 (800) | 80 | 10 | 100 | 369 | 2.10 |
| 59 | 5a | 14 (800) | 80 | 10 | 95 | ^{d} | - |
| 60 | 5b | 14 (800) | 80 | 10 | 96 | ^{d} | - |
| 61 | 5a | 15 (800) | 80 | 4 | 100 | 23 | 3.41 |
| 62 | 5b | 15 (800) | 80 | 4 | 100 | 17 | 2.87 |
| 63 | 5a | 16 (800) | 80 | 10 | 100 | ^{d} | - |
| 64 | 5b | 16 (800) | 80 | 10 | 100 | ^{d} | - |
| 65 | 5a | 17 (250) | 80 | 15 | 80 | 335 | 1.70 |
| 66 | 5b | 17 (250) | 80 | 15 | 88 | 279 | 1.83 |
| 67 | 5b | 17 (250) | 80 | 6 | 68 | - | - |

| | | | | | | | |
|---|---|---|---|---|---|---|---|
| ^{d} molecular weight could not be determined because of the insolubility of the polymer. | | | | | | | |

### EXAMPLE 17 - ring closing metathesis reaction

The ring closing metathesis reaction of various dienes was performed according to the following procedure. In a 10 ml Schlenck tube, 0.095 mmole of a diene, 13.2 µl (0.095 mmole) mesitylene, and 50 µl of a solution of a Schiff base vinylidene ruthenium complex prepared according to example 15 were added to 1 ml of deuterated benzene and heated with stirring to 70 or 85°C (as mentioned in table 11 below). Ethylene formed was removed *in vacuo* at 10 minutes intervals. After 2 hours the solution was cooled to 20°C and poured into an NMR tube. Product yield is determined with ¹H-NMR analysis by integration of allylic protons. The formation of cyclic isomers, oligomers or telomers was ruled out by GC-MS analysis of the reaction mixture. The reaction product was identified by purification of the concentrated reaction mixture by flash column chromatography over a silica gel column (hexane/ethyl acetate = 6:1, R_{f} = 0.3).

The following table 11 successively indicates for each experiment, after the reaction temperature T (expressed in °C, first column), the structure of the diene involved, the structure of the resulting product , the reaction time (expressed in hours) and the reaction yield for each of the Schiff base vinylidene ruthenium complex used as a catalyst (using the same identification number as in example 15).

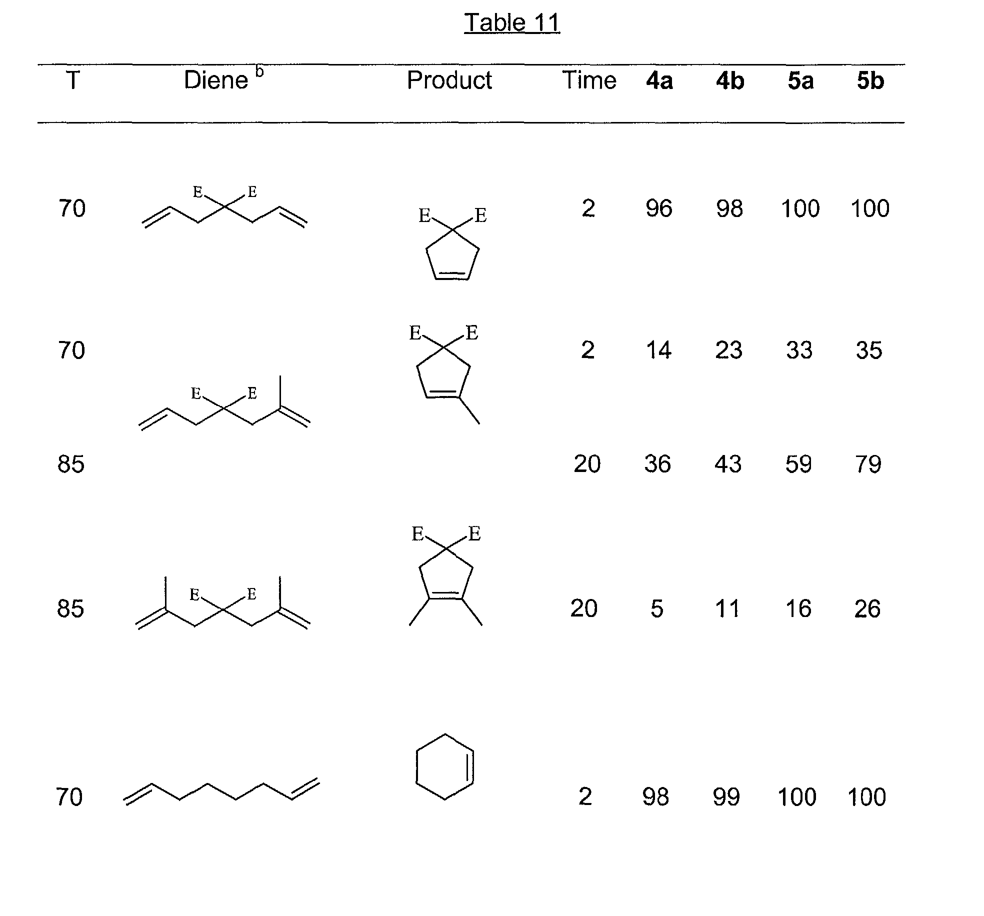

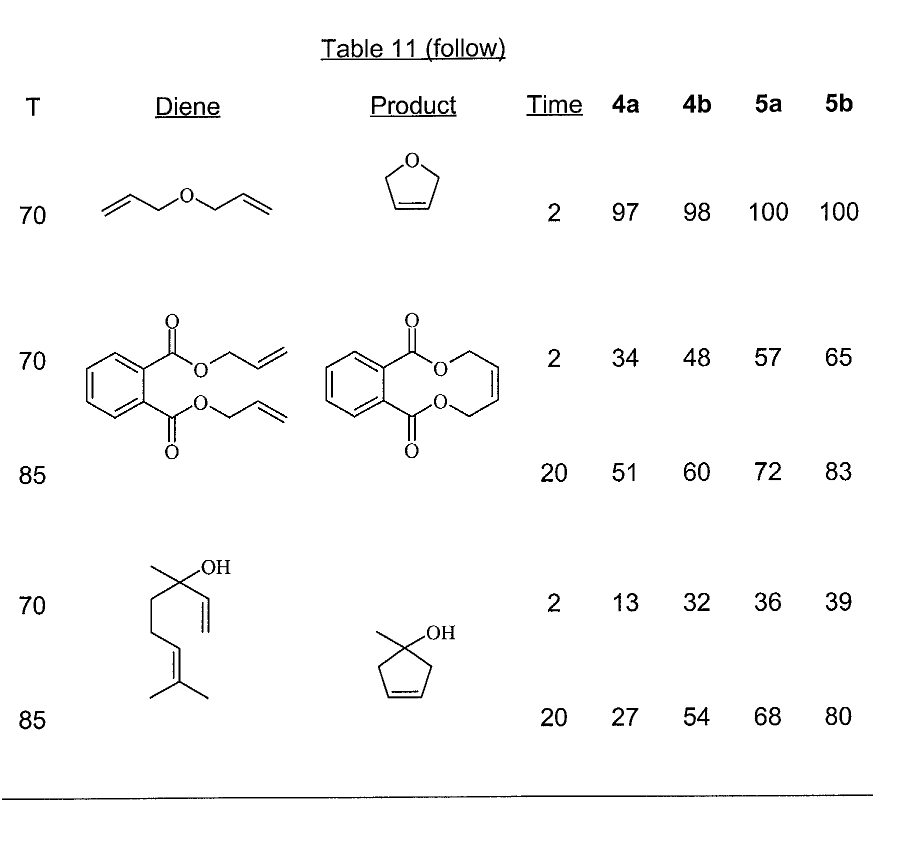

## Claims

1. A compound having one of the general formulae: 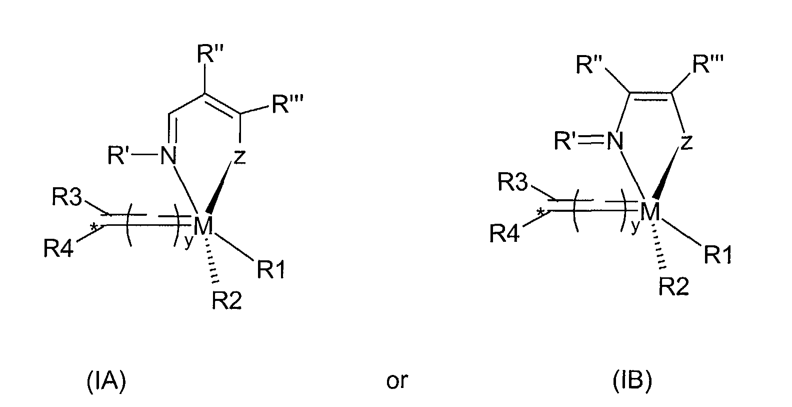 wherein:
- M is a metal selected from the group consisting of ruthenium, osmium, iron, molybdenum, tungsten, titanium, rhenium, copper, chromium, manganese, rhodium, vanadium, zinc, gold, silver, nickel and cobalt;
- Z is selected from the group consisting of oxygen, sulphur, NR"" and PR"";
- R", R"' and R"" are each a radical independently selected from the group consisting of hydrogen, C₁₋₆ alkyl, C₃₋₈ cycloalkyl, aryl and heteroaryl, or R" and R''' together form an aryl or heteroaryl radical, each said radical being optionally substituted with one or more substituents R₅ each independently selected from the group consisting of halogen atoms, C₁₋₆ alkyl, C₁₋₆ alkoxy, aryl, alkylsulfonate, arylsulfonate, alkylphosphonate, arylphosphonate, alkylammonium and arylammonium;
- R' is either as defined for R", R"' and R"" when included in a compound having the general formula (IA) or, when included in a compound having the general formula (IB), is selected from the group consisting of hydrogen, C₁₋₆ alkylene and C₃₋₈ cycloalkylene, the said alkylene and cycloalkylene group being optionally substituted with one or more substituents R₅;
- R₁ is selected from the group consisting of imidazol-2-ylidene, dihydroimidazol-2-ylidene, oxazol-2-ylidene, triazol-5-ylidene, thiazol-2-ylidene and non-ionic prophosphatrane superbases, and derivatives thereof
wherein one or more hydrogen atoms is substituted with a R' group;
- R₂ is selected from the group consisting of C₁₋₂₀ alkyl, C₁₋₂₀ alkenyl, C₁₋₂₀ alkynyl, C₁₋₂₀ carboxylate, C₁₋₂₀ alkoxy, C₁₋₂₀ alkenyloxy, C₁₋₂₀ alkynyloxy, aryl, aryloxy, C₁₋₂₀ alkoxycarbonyl, C₁₋₈ alkylthio, C₁₋₂₀ alkylsulfonyl, C₁₋₂₀ alkylsulfinyl C₁₋₂₀ alkylsulfonate, arylsulfonate, C₁₋₂₀ alkylphosphonate, arylphosphonate, C₁₋₂₀ alkylammonium, arylammonium, halogen atoms and cyano;
- R₃ and R₄ are each hydrogen or a radical selected from the group consisting of C₁₋₂₀ alkyl, C₁₋₂₀ alkenyl, C₁₋₂₀ alkynyl, C₁₋₂₀ carboxylate, C₁₋₂₀ alkoxy, C₁₋₂₀ alkenyloxy, C₁₋₂₀ alkynyloxy, aryl, aryloxy, C₁₋₂₀ alkoxycarbonyl, C₁₋₈ alkylthio, C₁₋₂₀ alkylsulfonyl, C₁₋₂₀ alkylsulfinyl C₁₋₂₀ alkylsulfonate, arylsulfonate, C₁₋₂₀ alkylphosphonate, arylphosphonate, C₁₋₂₀ alkylammonium and arylammonium;
- R₃ and R₄ together may form a fused aromatic ring system, and
- y represents the number of sp₂ carbon atoms between M and the carbon atom bearing R₃ and R₄ and is an integer from 0 to 3 inclusive.

2. A compound having one of the general formulae : 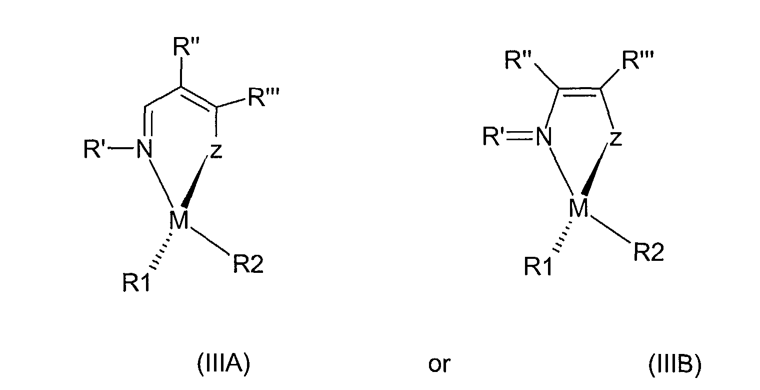 wherein:
- M is a metal selected from the group consisting of ruthenium, osmium, iron, molybdenum, tungsten, titanium, rhenium, copper, chromium, manganese, rhodium, vanadium, zinc, gold, silver, cobalt and nickel;
- Z is selected from the group consisting of oxygen, sulphur, NR"" and PR"";
- R", R''' and R"" are each a radical independently selected from the group consisting of hydrogen, C₁₋₆ alkyl, C₃₋₈ cycloalkyl, aryl and heteroaryl, or R" and R"' together form an aryl or heteroaryl radical, each said radical being optionally substituted with one or more substituents R₅ each independently selected from the group consisting of halogen atoms, C₁₋₆ alkyl, C₁₋₆ alkoxy, aryl, alkylsulfonate, arylsulfonate, alkylphosphonate, arylphospho-nate, alkylammonium and arylammonium;
- R' is either as defined for R", R"' and R"" when included in a compound having the general formula (IA) or, when included in a compound having the general formula (IB), is selected from the group consisting of hydrogen, C₁₋₆ alkylene and C₃₋₈ cycloalkylene, the said alkylene and cycloalkylene group being optionally substituted with one or more substituents R₅;
- R₁ is selected from the group consisting of imidazol-2-ylidene, dihydroimidazol-2-ylidene, oxazol-2-ylidene, triazol-5-ylidene, thiazol-2-ylidene and non-ionic prophosphatrane superbases, and derivatives thereof
wherein one or more hydrogen atoms is substituted with a R' group; and
- R₂ is selected from the group consisting of C₁₋₂₀ alkyl, C₁₋₂₀ alkenyl, C₁₋₂₀ alkynyl, C₁₋₂₀ carboxylate, C₁₋₂₀ alkoxy, C₁₋₂₀ alkenyloxy, C₁₋₂₀ alkynyloxy, aryl, aryloxy, C₁₋₂₀ alkoxycarbonyl, C₁₋₈ alkylthio, C₁₋₂₀ alkylsulfonyl, C₁₋₂₀ alkylsulfinyl C₁₋₂₀ alkylsulfonate, arylsulfonate, C₁₋₂₀ alkylphosphonate, arylphosphonate, C₁₋₂₀ alkylammonium, arylammonium, halogen atoms and cyano,
or one of the general formulae : 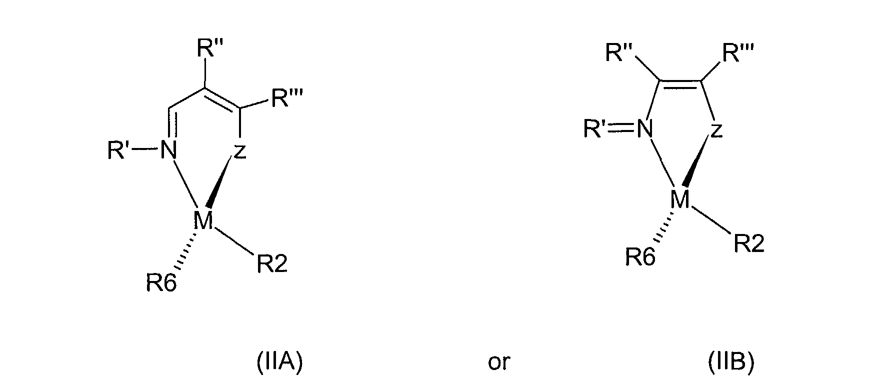 wherein:
- M is a metal selected from the group consisting of ruthenium, osmium, iron, molybdenum, tungsten, titanium, rhenium, copper, chromium, manganese, rhodium, vanadium, zinc, gold, silver, cobalt and nickel;
- Z is selected from the group consisting of oxygen, sulphur, NR"" and PR"";
- R", R''' and R"" are each a radical independently selected from the group consisting of hydrogen, C₁₋₆ alkyl, C₃₋₈ cycloalkyl, aryl and heteroaryl, each said radical being optionally substituted with one or more substituents R₅ each independently selected from the group consisting of halogen atoms, C₁₋₆ alkyl, C₁₋₆ alkoxy, aryl, alkylsulfonate, arylsulfonate, alkylphosphonate, arylphospho-nate, alkylammonium and arylammonium, or R" and R''' together form an aryl or heteroaryl radical, the said radical being substituted with either one substituent R₅ selected from the group consisting of bromine, C₂₋₆ alkyl, C₂₋₆ alkoxy, aryl, alkylsulfonate, arylsulfonate, alkylphosphonate, arylphosphonate, alkylammonium and arylammonium, or two or more substituents R₅ each independently selected from the group consisting of halogen atoms, C₁₋₆ alkyl, C₁₋₆ alkoxy, aryl, alkylsulfonate, arylsulfonate, alkylphosphonate, arylphosphonate, alkylammonium and aryl-ammonium;
- R' is either as defined for R", R"' and R"" when included in a compound having the general formula (IA) or, when included in a compound having the general formula (IB), is selected from the group consisting of hydrogen, C₁₋₆ alkylene and C₃₋₈ cycloalkylene, the said alkylene and cycloalkylene group being optionally substituted with one or more substituents R₅;
- R₂ is selected from the group consisting of C₁₋₂₀ alkyl, C₁₋₂₀ alkenyl, C₁₋₂₀ alkynyl, C₁₋₂₀ carboxylate, C₁₋₂₀ alkoxy, C₁₋₂₀ alkenyloxy, C₁₋₂₀ alkynyloxy, aryl, aryloxy, C₁₋₂₀ alkoxycarbonyl, C₁₋₈ alkylthio, C₁₋₂₀ alkylsulfonyl, C₁₋₂₀ alkylsulfinyl C₁₋₂₀ alkylsulfonate, arylsulfonate, C₁₋₂₀ alkylphosphonate, arylphosphonate, C₁₋₂₀ alkylammonium, arylammonium, halogen atoms and cyano; and
- R₆ is a group selected from aromatic and unsaturated cycloaliphatic groups, the said group being optionally substituted with one or more C₁₋₆ alkyl groups,
being useful as intermediates for producing compounds according to claim 1.

3. Use of a compound according to claim 1, wherein M is selected from the group consisting of ruthenium, osmium, iron, molybdenum, tungsten, titanium and rhenium, as a catalyst for transforming a first olefin into at least one second olefin or into a linear olefin oligomer or polymer or a cycloolefin.

4. A supported catalyst for use in a heterogeneous catalytic reaction, comprising:
(a) a catalytically active compound according to claim 1, wherein M is selected from the group consisting of ruthenium, osmium, iron, molybdenum, tungsten, titanium and rhenium, and
(b) a supporting amount of a carrier suitable for supporting said catalytically active compound (a).

5. A method for performing a metathesis reaction comprising contacting at least one first olefin with a compound according to claim 1, wherein M is selected from the group consisting of ruthenium, osmium, iron, molybdenum, tungsten, titanium and rhenium, or a supported catalyst according to claim 4, the said first olefin optionally including one or more functional atoms or groups selected from the group consisting of alcohol, thiol, ketone, aldehyde, ester, disulfide, carbonate, imine, carboxyl, amine, amide, carboxylic acid, isocyanate, thioisocyanate, carbodiimide, ether, thioether, nitro, phosphate, halogen, ammonium, phosphonate and sulfonate, the said first olefin functional atom or group being either part of a substituting group of the first olefin or being part of the carbon chain of the first olefin.

6. A method according to claim 5, wherein the said first olefin is a diolefin or a cyclic mono-olefin with a ring size of at least three atoms.

7. A method according to claim 5, wherein the said metathesis reaction is for transforming a mixture of two dissimilar olefins, at least one of which is an alpha-olefin, selected from (i) cyclodienes containing from 5 to 12 carbon atoms and (ii) olefins having the formula:
XHC=CH-(CH₂)ᵣ-(CH=CH)ₐ-(CHX')_{c}-(CH₂)ₜ-X" (IV),
into an unsaturated biologically active compound having the formula:
H(CH₂)_{z}-(CH=CH)ₐ-(CH₂)ₘ-(CH=CH)_{b}-(CH₂)ₚX" (V),
wherein
a is an integer from 0 to 2,
b is selected from 1 and 2,
c is selected from 0 and 1,
m and p are such that the hydrocarbon chain in formula (V) contains
from 10 to 18 carbon atoms,
r and t are such that the combined total of carbon atoms in the hydrocarbon chains of the two dissimilar olefins of formula (IV) is from 12 to 40,
z is an integer from 1 to 10, and
X, X' and X" are atoms or groups each independently selected from hydrogen, halogen, methyl, acetyl, -CHO and -OR₁₂, wherein R₁₂ is selected from hydrogen and an alcohol protecting group selected from the group consisting of tetrahydropyranyl, tetrahydrofuranyl, tert-butyl, trityl, ethoxyethyl and SiR₁₃R₁₄R₁₅ wherein R₁₃, R₁₄ and R₁₅ are each independently selected from C₁₋₆ alkyl groups and aryl groups, the said unsaturated biologically active compound being a pheromone or pheromone precursor, an insecticide or a insecticide precursor, a pharmaceutical compound or a pharmaceutical intermediate, a fragrance or a fragrance precursor.

8. Use of a compound according to claim 1, wherein M is selected from the group consisting of ruthenium, osmium, iron, molybdenum, tungsten, titanium and rhenium, as a catalyst for the addition reaction of a polyhalogenated alkane onto an olefin.

9. Use of a compound according to claim 1, wherein M is selected from the group consisting of ruthenium, osmium, iron, molybdenum, tungsten, titanium and rhenium, or a compound having one of the general formulae: 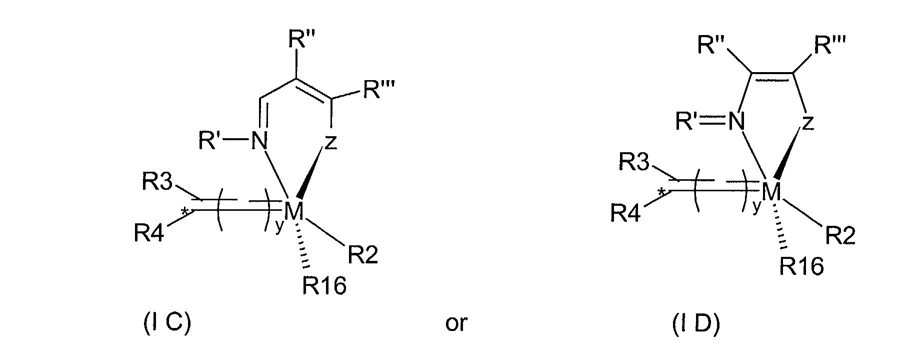 wherein:
- M, Z, R', R", R"', R"", R₂, R₃, R₄ and y are as defined in claim 1, and
- R₁₆ is a neutral electron donor,
as a catalyst component of a catalytic system for the atom or group transfer radical polymerization of one or more radically (co)polymerizable monomers.

10. Use according to claim 9, wherein R₁₆ is a phosphine of the formula PR₁₇R₁₈R₁₉ wherein R₁₇, R₁₈ and R₁₉ are each independently selected from the group consisting of C₁₋₁₀ alkyl, C₃₋₈ cycloalkyl and aryl.

11. Use according to claim 9 or claim 10, in combination with an initiator having a radically transferable atom or group, the said initiator having the formula
R₃₅R₃₆R₃₇CX₁
wherein:
- X₁ is selected from the group consisting of halogen, OR₃₈ (wherein R₃₈ is selected from C₁₋₂₀ alkyl, polyhaloC₁₋₂₀alkyl, C₂₋₂₀ alkynyl, C₂₋₂₀ alkenyl, phenyl optionally substituted with 1 to 5 halogen atoms or C₁₋₆ alkyl groups and phenyl-substituted C₁₋₆ alkyl), SR₃₉, OC(=O)R₃₉, OP(=O)R₃₉, OP(=O)(OR₃₉)₂, OP(=O)OR₃₉, O--N(R₃₉)₂ and S--C(=S)N(R₃₉)₂, wherein R₃₉ is aryl or C₁₋₂₀ alkyl, or where an N(R₃₉)₂ group is present, the two R₃₉ groups may be joined to form a 5-, 6- or 7-membered heterocyclic ring, and
- R_{35,} R₃₆ and R₃₇ are each independently selected from the group consisting of hydrogen, halogen, C₁₋₂₀ alkyl, C₃₋₈ cycloalkyl, C(=O)R₄₀ (wherein R₄₀ is selected from the group consisting of C₁₋₂₀ alkyl, C₁₋₂₀ alkoxy, aryloxy or heteroaryloxy), C(=O)NR₄₁R₄₂ (wherein R₄₁ and R₄₂ are independently selected from the group consisting of hydrogen and C₁₋₂₀ alkyl or R₄₁ and R₄₂ may be joined together to form an alkylene group of 2 to 5 carbon atoms), COCI, OH, CN, C₂₋₂₀ alkenyl, C₂₋₂₀ alkynyl, oxiranyl, glycidyl, aryl, heteroaryl, arylalkyl and aryl-substituted C₂₋₂₀ alkenyl.

12. A catalytic system for atom or group transfer radical polymerization, comprising a compound according to claim 1, wherein M is selected from the group consisting of ruthenium, osmium, iron, molybdenum, tungsten, titanium and rhenium, or a compound having one of the general formulae: 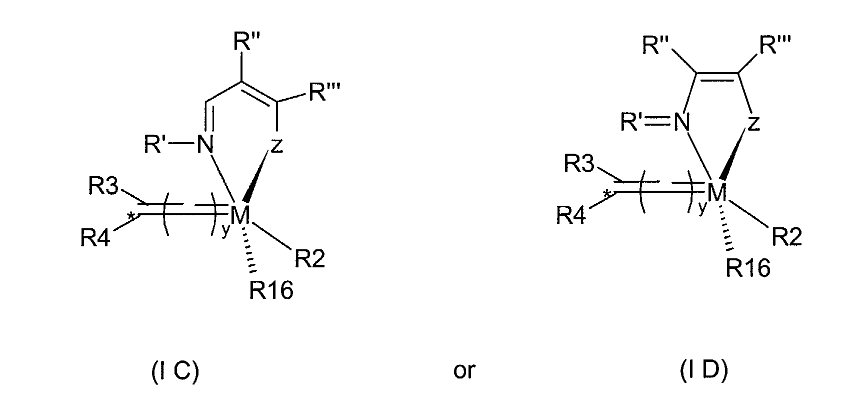 wherein:
- M, Z, R', R", R"', R"", R₂, R₃, R₄ and y are as defined in claim 1, and
- R₁₆ is a neutral electron donor, in combination with an initiator having the formula R₃₅R₃₆R₃₇CX₁ wherein:
- X₁ is selected from the group consisting of halogen, OR₃₈ (wherein R₃₈ is selected from C₁₋₂₀ alkyl, polyhaloC₁₋₂₀alkyl, C₂₋₂₀ alkynyl, C₂₋₂₀ alkenyl, phenyl optionally substituted with 1 to 5 halogen atoms or C₁₋₆ alkyl groups and phenyl-substituted C₁₋₆ alkyl), SR₃₉, OC(=O)R₃₉, OP(=O)R₃₉, OP(=O)(OR₃₉)₂, OP(=O)OR₃₉, O--N(R₃₉)₂ and S--C(=S)N(R₃₉)₂, wherein R₃₉ is aryl or C₁₋₂₀ alkyl, or where an N(R₃₉)₂ group is present, the two R₃₉ groups may be joined to form a 5-, 6- or 7-membered heterocyclic ring, and
- R_{35,} R₃₆ and R₃₇ are each independently selected from the group consisting of hydrogen, halogen, C₁₋₂₀ alkyl, C₃₋₈ cycloalkyl, C(=O)R₄₀ (wherein R₄₀ is selected from the group consisting of C₁₋₂₀ alkyl, C₁₋₂₀ alkoxy, aryloxy or heteroaryloxy), C(=O)NR₄₁R₄₂ (wherein R₄₁ and R₄₂ are independently selected from the group consisting of hydrogen and C₁₋₂₀ alkyl or R₄₁ and R₄₂ may be joined together to form an alkylene group of 2 to 5 carbon atoms), COCI, OH, CN, C₂₋₂₀ alkenyl, C₂₋₂₀ alkynyl, oxiranyl, glycidyl, aryl, heteroaryl, arylalkyl and aryl-substituted C₂₋₂₀ alkenyl.

13. A derivative of a compound according to claim 1, being suitable for covalent bonding to a carrier, having the formula (I), wherein M, Z, R''', R_{1,} R_{2,} R_{3,} R₄ and y are as defined in claim 1, and further wherein R' and/or R" is replaced or substituted with a group having the formula:
-R₂₀-(CH₂)ₙ-D-Si-R₂₁R₂₂R₂₃ (VI),
wherein:
- R₂₀ is a radical selected from the group consisting of C₁₋₆ alkylene, arylene, heteroarylene and C₃₋₈ cycloalkylene, the said radical being optionally substituted with one or more R₂₄ substituents each independently selected from the group consisting of C₁₋₂₀ alkyl, C₂₋₂₀ alkenyl, C₂₋₂₀ alkynyl, C₁₋₂₀ carboxylate, C₁₋₂₀ alkoxy, C₂₋₂₀ alkenyloxy, C₂₋₂₀ alkynyloxy, C₂₋₂₀ alkoxycarbonyl, C₁₋₂₀ alkylsulfonyl, C₁₋₂₀ alkynylsulfinyl, C₁₋₂₀ alkylthio, aryloxy and aryl;
- D is a divalent atom or radical selected from the group consisting of oxygen, sulphur, silicon, arylene, methylene, CHR₂₄, C(R₂₄)₂, NH, NR₂₄ and PR₂₄;
- R₂₁, R₂₂ and R₂₃ are each independently selected from hydrogen, halogen or a R₂₄ substituent; and
- n is an integer from 1 to 20; provided that at least one of R₂₁, R₂₂ and R₂₃ is selected from the group consisting of C₁₋₂₀ alkoxy, C₂₋₂₀ alkenyloxy, C₂₋₂₀ alkynyloxy, C₂₋₂₀ alkoxycarbonyl, C₁₋₂₀ alkylsulfonyl, C₁₋₂₀ alkynylsulfinyl, C₁₋₂₀ alkylthio and aryloxy.

14. A supported catalyst for use in a heterogeneous catalytic reaction, comprising the product of covalent bonding of:
(a) a derivative according to claim 13, and
(b) a carrier being an inorganic oxide selected from silica, alumino-silica, natural and synthetic zeolites, or an organic polymeric material such as a polystyrene resin or a derivative thereof wherein the aromatic ring is substituted with one or more groups selected from C₁₋₆ alkyl, C₃₋₈ cycloalkyl, aryl and heteroaryl.

15. A dendrimeric material comprising two or more compounds according to claim 1 or claim 2, each being attached to a core molecule, either directly or indirectly via a spacer molecule, by means of their N and/or or Z atoms and/or, when R', R" or R''' bears a functional group, by means of the said functional group.

16. A dendrimeric material according to claim 15, wherein the core molecule is selected from the group consisting of:
- aryl, polyaryl, heteropolyaryl, alkyl, cycloalkyl and heterocycloalkyl radicals, and
- groups having the formula A(R₂₀)ₙX₃₋ₙ, wherein A is an element of group IIIA of the Periodic Classification of Elements or nitrogen, or the formula G(R₂₀)ₙX₄₋ₙ, wherein G is an element of group IVA, or the formula J(R₂₀)ₙX₅₋ₙ, wherein J is an element of group VA other than nitrogen, or the formula E(R₂₀)ₙX₂₋ₙ, wherein E is an element from group VIA , wherein in the said formulae X is hydrogen or halogen, and
- transition metal compounds of any metal of groups IIB, IIIB, IVB, VB, VIB, VIIB and VIIIB of the Periodic Classification of Elements.

17. A dendrimeric material according to claim 15 or claim 16, wherein the spacer molecule has the general formula R₂₀-(CH₂)-D wherein R₂₀, n and D are defined as in claim 42.

18. Use of a dendrimeric material according to any of claims 15 to 17 as a catalyst for transforming a first olefin into at least one second olefin or into a linear olefin oligomer or polymer, the said catalyst being suitable for removal from the reaction mixture by ultra-filtration.

19. A compound having the general formula 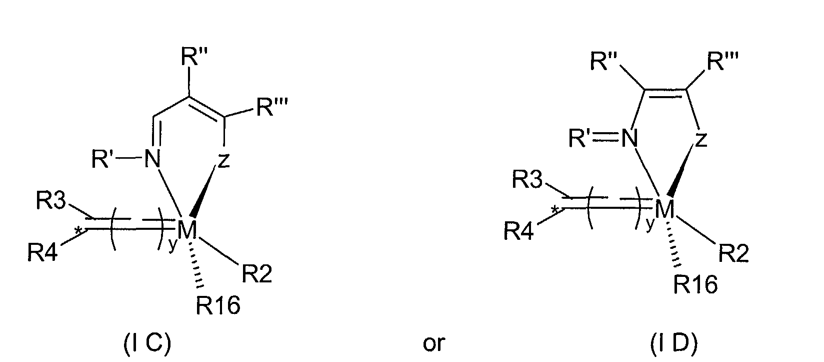 wherein:
- M, Z, R', R", R"', R₂, R₃, R₄ are as defined in claim 1,
- y is from 1 to 3 inclusive, and
- R₁₆ is a neutral electron donor.

20. A compound having the general formula: 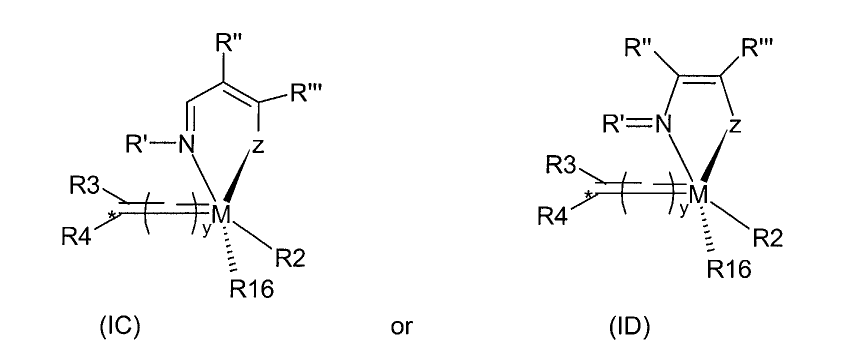 wherein:
- Z, R', R", R"', R"", R₂, R₃, R₄ are as defined in claim 1,
- M is a metal selected from the group consisting of iron, molybdenum, tungsten, titanium, rhenium, copper, chromium, manganese, rhodium, vanadium, zinc, gold, silver, cobalt and nickel,
- y is 0, and
R₁₆ is a neutral electron donor.
